# EUROPEAN PATENT SPECIFICATION

(11) **EP 3 712 986 B1**
(45) Date of publication and mention of the grant of the patent: **28.04.2021**
(21) Application number: 19195897.4
(22) Date of filing: 06.09.2019
(51) Int. Cl.: H01M 4/131, H01M 4/485, H01M 10/0525, H01M 10/056

(54) **SECONDARY BATTERY, BATTERY PACK, AND VEHICLE**
SEKUNDÄRBATTERIE, BATTERIEPACK UND FAHRZEUG
BATTERIE SECONDAIRE, BLOC-BATTERIE ET VÉHICULE

(30) Priority: 18.03.2019 JP 2019049745
(43) Date of publication of application: 23.09.2020
(73) Proprietor: Kabushiki Kaisha Toshiba, Minato-ku Tokyo 105-0023 (JP)
(72) Inventor: Takami, Norio, Tokyo, 105-0023 (JP); Kishi, Takashi, Tokyo, 105-0023 (JP); Yoshima, Kazuomi, Tokyo, 105-0023 (JP); Harada, Yasuhiro, Tokyo, 105-0023 (JP)
(74) Representative: Hoffmann Eitle

(56) References cited:
- EP-A1- 0 977 296
- WO-A1-2018/038417

## Description

### FIELD

This disclosure relates to a secondary battery, a battery pack, and a vehicle.

### BACKGROUND

Nonaqueous electrolyte batteries using lithium metal, a lithium alloy, a lithium compound, or a carbonaceous material as their negative electrodes are expected to be high energy density batteries, and research and development thereon are actively promoted. A lithium-ion battery which includes: a positive electrode including LiCoO₂, LiNi_{1/3}Co_{1/3}Mn_{1/3}O₂, or LiMn₂O₄ as an active material; and a negative electrode including a carbonaceous material which allows lithium ions to be inserted in and to be extracted from has been widely put to practical use for portable devices so far.

On the other hand, on installing the battery in a vehicle such as an automobile or a car of a train, materials excellent in chemical and electrochemical stabilities, strength, and corrosion resistance are required for materials of the positive electrode and the negative electrode in terms of storage performance under a high temperature environment (60°C or higher), cycle performance, high output, long-term reliability, and the like. Further, the battery is required to have high performance even in cold districts, and improvements in high output performance and lifetime performance under a low temperature environment (-30°C) are required. In addition, as for a nonaqueous electrolyte used for the battery, while development of solid electrolytes and nonvolatile, non-flammable electrolytic solutions is promoted in terms of improving safety performance, these electrolytes involve decreases in output performance, performance at a low temperature, and lifetime performance and therefore have not been practically used yet.

Accordingly, in order to install a nonaqueous electrolyte battery such as a lithium-ion battery as a replacement of a lead storage battery in a vehicle (for example, an engine room of an automobile) or the like, there is a problem with high-temperature durability and output performance at a low temperature.

While studies are made on such a secondary battery to achieve both performance at a low temperature and lifetime performance at a high temperature by improving its nonaqueous electrolyte, it is difficult to achieve both performance at a low temperature and lifetime performance at a high temperature because the nonaqueous electrolyte, which has a high ion conductivity at a low temperature, is likely to react with the positive electrode at a high temperature and lifetime performance is considerably reduced accordingly.

EP0977296A1 discloses a lithium ion secondary battery comprising an inorganic solid -containing layer disposed between the cathode and the anode; said inorganic solid-containing layer comprises a solvent mixture, which was obtained by mixing propylene carbonate and dimethoxy ethane in the ratio of 1:1 by volume and inorganic particles consisting of 0.01Li₃PO₄-0.63Li₂S-0.36SiS₂.

### BRIEF DESCRIPTION OF THE DRAWINGS

FIG. 1 is a partially cutaway cross-sectional view of a secondary battery of an approach;
FIG. 2 is a side view of the battery of FIG. 1;
FIG. 3 is a cross-sectional view cutting the secondary battery of the approach in a direction perpendicular to an extending direction of a terminal;
FIG. 4 is an enlarged cross-sectional view of the part A of FIG 3;
FIG. 5 is a cross-sectional view showing another example of the secondary battery according to the approach;
FIG. 6 is a perspective view showing an example of a battery module including the secondary battery of the approach;
FIG. 7 is an exploded perspective view of a battery pack of the approach;
FIG. 8 is a block diagram showing an electric circuit of the battery pack of FIG. 7;
FIG. 9 is a schematic drawing showing an example of a vehicle equipped with the secondary battery of the approach;
FIG. 10 is a view schematically showing another example of a vehicle according to the approach; and
FIG. 11 is a scanning electron microscope picture showing a cross-section near a surface of the positive electrode of Example 26.

### DETAILED DESCRIPTION

### (First Approach)

According to one approach, provided is a secondary battery including a positive electrode, a negative electrode capable of allowing lithium ions to be inserted and to be extracted, and an inorganic solid-containing layer. The inorganic solid-containing layer is disposed between the positive electrode and the negative electrode. In addition, the inorganic solid-containing layer contains a mixed solvent, a lithium salt dissolved in the mixed solvent, and inorganic solid particles. The mixed solvent includes a fluorinated carbonate and a fluorinated ether.

According to another approach, provided is a battery pack including the secondary battery according to the approach.

According to still another approach, provided is a vehicle including the battery pack according to the approach.

The mixed solvent that includes a fluorinated carbonate and a fluorinated ether is resistant to oxidative decomposition even being exposed to a high temperature and a high potential and is excellent in oxidation resistance. In addition, this mixed solvent is non-flammable and therefore excellent in safety. Further, a nonaqueous electrolyte including a lithium salt that is dissolved in this mixed solvent has a low viscosity and therefore easily permeates gaps between the inorganic solid particles in the inorganic solid-containing layer to allow the contact area with the inorganic solid particles to enlarge. As a result, the ion conductivity of the inorganic solid-containing layer increases.

Accordingly, the secondary battery of the approach can suppress oxidative decomposition of the nonaqueous electrolyte upon exposure to a high temperature and a high potential to reduce an amount of gas to be generated, and therefore the secondary battery of the approach is excellent in cycle life performance and high-temperature durability performance. In addition, since a decrease in lithium ion mobility in the secondary battery under a low-temperature environment is suppressed, performance at a low temperature can be improved. Therefore, a secondary battery excellent in performance at a low temperature, cycle life performance, and high-temperature durability performance can be achieved. In addition, since oxidative decomposition of the nonaqueous electrolyte is suppressed, gas generation is reduced even when a high potential positive electrode is used, and practical use of a high-voltage secondary battery including a high potential positive electrode becomes possible.

Since non-flammability of the nonaqueous electrolyte is further enhanced by using a salt including a fluorine atom as the lithium salt, safety of the secondary battery can be further enhanced.

A weight ratio between the fluorinated carbonate and the fluorinated ether is desirably within the range of 1:1 to 9:1. By virtue of the above range, the oxidation resistance and ion conductivity of the nonaqueous electrolyte can be improved. In addition, the viscosity of the nonaqueous electrolyte becomes appropriate, and the wettability of the nonaqueous electrolyte with respect to the inorganic solid particles can be made good. Accordingly, the performance at a low temperature, cycle life performance, and high-temperature durability performance of the secondary battery can be further improved.

The examples of fluorinated carbonate desirably includes at least one selected from the group consisting of fluoroethylene carbonate (FEC), difluoroethylene carbonate (DFEC), trifluoroethyl methyl carbonate (FEMC), trifluorodiethyl carbonate (FDEC), and trifluorodimethyl carbonate (FDMC). Consequently, the performance at a low temperature, cycle life performance, and high-temperature durability performance of the secondary battery can be further improved. In addition, a compound having a small molecular weight such as FEC is likely to cause solvation with lithium ions and therefore preferable, for example.

The examples of fluorinated ether desirably includes at least one selected from the group consisting of 1,1,2,2-tetrafluoroethyl-2,2,2-trifluoroethyl ether (TFTrEE), 1,1,2,2-tetrafluoroethyl-2,2,3,3-tetrafluoropropyl ether (TFTFPE), bis(2,2,2-trifluoroethyl) ether (BTrFEE), bis(1,1,2,2-tetrafluoroethyl) ether (BTFEE), and ethyl 1,1,2,2-tetrafluoroethyl ether (TFEE). Consequently, the performance at a low temperature, cycle life performance, and high-temperature durability performance of the secondary battery can be further improved. In addition, a compound having a small molecular weight is likely to cause solvation with lithium ions and therefore preferable.

The inorganic solid particles desirably include a lithium phosphate compound with a nasicon-type structure represented by Li₁₊ₓM₂(PO₄)₃ (M is at least one selected from the group consisting of Ti, Ge, Zr, Al, and Ca, 0 ≤ x ≤ 0.5). This lithium phosphate compound is stable in the air. Therefore, the inorganic solid-containing layer including the inorganic solid particles is excellent in stability with respect to the positive electrode and the negative electrode. Accordingly, the cycle life performance can be improved.

The negative electrode desirably includes at least one selected from the group consisting of a lithium titanium-containing oxide, a titanium-containing oxide, and a titanium niobium-containing oxide. Reductive decomposition of the nonaqueous electrolyte is considerably suppressed by using the negative electrode active material, and the cycle life performance of the secondary battery can be improved.

The positive electrode, the negative electrode, and the inorganic solid-containing layer will be described below.

### (Positive Electrode)

This positive electrode includes a positive electrode current collector and a positive electrode active material-containing layer which is held on one surface or both surfaces, on at least one primary surface out of two primary surfaces of the current collector and which includes an active material, a conductive agent, and a binder.

A positive electrode having a high electrochemical stability with respect to the inorganic solid-containing layer and having a small interface resistance is desirably used as the positive electrode.

Examples of the positive electrode active material include a lithium manganese composite oxide, a lithium cobalt composite oxide, a lithium nickel composite oxide, a lithium nickel cobalt composite oxide, a lithium cobalt aluminum composite oxide, a lithium nickel aluminum composite oxide, a lithium nickel cobalt manganese composite oxide, a lithium manganese nickel composite oxide with a spinel structure, a lithium manganese cobalt composite oxide, a lithium-containing phosphate compound with an olivine structure, fluorinated iron sulfate, and LiₓFe₁₋ₐMnₐSO₄F (0 < x ≤ 1, 0 ≤ a < 1) having a tavorite structure, and the like. One kind or two or more kinds of the positive electrode active material can be used.

LiₓMn₂O₄ (0 < x ≤ 1), LiₓMnO₂ (0 < x ≤ 1), and the like are exemplified as the lithium manganese composite oxide, for example.

LiₓCoO₂ (0 < x ≤ 1) and the like are exemplified as the lithium cobalt composite oxide, for example.

LiₓNi_{1-y}Al_{y}O₂ (0 < x ≤ 1, 0 < y ≤ 1) and the like are exemplified as the lithium nickel aluminum composite oxide, for example.

LiₓNi_{1-y-z}Co_{y}Mn_{z}O₂ (0 < x ≤ 1, 0 < y ≤ 1, 0 ≤ z ≤ 1, 0 < 1-y-z < 1) and the like are exemplified as the lithium nickel cobalt composite oxide, for example.

LiₓMn_{y}Co_{1-y}O₂ (0 < x ≤ 1, 0 < y < 1) and the like are exemplified as the lithium manganese cobalt composite oxide, for example.

LiₓMn_{2-y}Ni_{y}O₄ (0 < x ≤ 1, 0 < y < 2) and the like are exemplified as the lithium manganese nickel composite oxide with a spinel structure, for example.

LiₓFePO₄ (0 < x ≤ 1), LiₓFe_{1-y}Mn_{y}PO₄ (0 < x ≤ 1, 0 ≤ y ≤ 1), LiₓCoPO₄ (0 < x ≤ 1), LiₓMPO₄ (0 < x ≤ 1), and the like are exemplified as the lithium-containing phosphate compound with an olivine structure, for example.

LiₓFeSO₄F (0 < x ≤ 1) and the like are exemplified as the fluorinated iron sulfate, for example.

LiₓNi_{1-y-z}Co_{y}Mn_{z}O₂ (0 < x ≤ 1.1, 0 < y ≤ 0.5, 0 < z ≤ 0.5, 0 < 1-y-z < 1) and the like are exemplified as the lithium nickel cobalt manganese composite oxide, for example.

According to the above positive electrode active material, a high positive electrode voltage can be obtained.

The lithium nickel manganese cobalt composite oxide (for example, LiₓNi_{1+y-2}Co_{y}Mn_{z}O₂) is preferable as a positive electrode active material with a high capacity. The lithium manganese nickel composite oxide with a spinel structure (for example, LiₓMn_{2-y}Ni_{y}O₄) and the lithium cobalt phosphate with an olivine structure (LiₓCoPO₄) are preferable as a positive electrode active material with a high voltage. The deterioration of the high-capacity or high-voltage positive electrode active material and the oxidative decomposition of the nonaqueous electrolyte can be suppressed by using the inorganic solid-containing layer according to the approach, and the cycle life performance and high-temperature stability of the secondary battery can be enhanced. Further, since the nonaqueous electrolyte and the inorganic solid particles in the electrolyte are stable even when the positive electrode decomposes due to over-charge and oxygen is extracted therefrom, exothermic reaction associated with oxidation reaction is considerably suppressed to suppress thermal runaway reaction.

Preferable examples of the positive electrode active material include a lithium-containing metal compound represented by LiₓM_{y}O₂, LiₓM_{2y}O₄, LiₓM_{y}SO₄F, or LiₓM_{y}PO₄ (M is at least one element selected from the group consisting of Mn, Ni, Co, and Fe, 0 < x ≤ 1.1, 0.8 ≤ y ≤ 1.1). LiₓMn₂O₄, LiₓMnO₂, a lithium nickel cobalt composite oxide (for example, LiₓNi₁₋ₐCoₐO₂), a lithium cobalt composite oxide (for example, LiₓCoO₂), a lithium nickel manganese cobalt composite oxide (for example, LiₓNi_{1-a-b}MnₐCo_{b}O₂), a lithium manganese cobalt composite oxide (for example, LiₓMn₁₋ₐCoₐO₂), a spinel-type lithium manganese nickel composite oxide (LiₓMn₂₋ₐNiₐO₄), LiₓFe₁₋ₐMnₐSO₄F having a tavorite structure, a lithium phosphate having an olivine structure (LiₓFePO₄, LiₓFe₁₋ₐMnₐPO₄, LiₓCoPO₄, and the like) (0 ≤ a ≤ 1, 0 ≤ b ≤ 1) are exemplified as more preferable examples of the positive electrode active material.

In addition, at least one element selected from the group consisting of Mg, Al, Ti, Nb, Sn, Zr, Ba, B, and C (hereinafter, referred to as a first element) may be present on at least a part of the surfaces of the positive electrode active material particles. Such a positive electrode active material can suppress the oxidative decomposition reaction of the nonaqueous electrolyte under a high-temperature environment and therefore can suppress an increase in resistance. Consequently, the cycle life performance at a high temperature of the secondary battery can be considerably improved.

It is preferable that the first element adheres in a form of metal oxide particles and/or phosphate particles having a particle size of 0.001 to 1 µm, or the first element coats at least a part of the surfaces of the positive electrode active material particles as a metal oxide layer or a phosphate layer. Alternatively, the first element may form solid solution in a surface layer of the positive electrode active material particles. Examples of the metal oxide include MgO, Al₂O₃, SnO, ZrO₂, TiO₂, BaO, B₂O₃, and the like. Examples of the phosphate include AlPO₄, Mg₃(PO₄)₂, Sn₃(PO₄)₂, and the like. In addition, when C is used as the first element, it is preferable that carbon particles having an average particle size of 1 µm or less adhere to the surface of the active material. The amount of the metal oxide, the phosphate, or the carbon particles as the first element is preferably 0.001 to 3% by weight of the positive electrode active material. When the amount exceeds this range, resistance at the interface between the positive electrode and the inorganic solid-containing layer may increase to deteriorate output performance. In addition, when the amount is less than this range, the reactivity between the positive electrode active material and the inorganic solid-containing layer may increase under a high-temperature environment to deteriorate cycle life performance.

The positive electrode active material particles may be in a form of primary particles or may be secondary particles in which primary particles aggregate. In addition, primary particles and secondary particles may coexist.

The average primary particle size of the positive electrode active material particles may be 0.05 µm or more and 5 µm or less, and a more preferable range is 0.05 µm or more and 3 µm or less. In addition, the average secondary particle size of the positive electrode active material particles may be 3 µm or more and 20 µm or less.

The conductive agent may enhance electron conductivity and reduce contact resistance with the current collector. Acetylene black, carbon black, carbon nanotubes, graphite, and the like can be exemplified as the conductive agent, for example.

The binder may bind the active material and the conductive agent. Polymer such as polytetrafluoroethylene (PTFE), polyvinylidene fluoride (PVdF), fluoro rubber, styrene-butadiene rubber, carboxymethyl cellulose (CMC), and acrylic material are exemplified as the binder, for example. The binder can impart flexibility to the active material-containing layer including polymer fibers. PVdF and styrene-butadiene rubber are excellent in the effect of enhancing flexibility.

The blending ratios of the positive electrode active material, the conductive agent, and the binder are preferably in the following range: 80 to 95% by weight for the positive electrode active material, 3 to 19% by weight for the conductive agent, and 1 to 7% by weight for the binder.

The positive electrode may include inorganic solid particles. Consequently, ion conductivity of the positive electrode becomes good, and resistance between the positive electrode and the inorganic solid-containing layer is also reduced. Specific examples of the inorganic solid particles will be described later. The content of the inorganic solid particles in the positive electrode active material-containing layer is desirably 10% by weight or less in order to increase weight energy density. A more preferable range is 1% by weight or more and 10% by weight or less. In addition, it is preferable that at least one selected from Al₂O₃, TiO₂, ZrO₂, an oxide-based inorganic solid electrolyte having lithium ion conductivity, and the like is included in pores in the positive electrode in an amount of 1% by weight or more and 10% by weight or less as the inorganic solid particles. Consequently, discharge characteristics can be improved by reducing resistance at a low temperature.

The positive electrode is produced by suspending the positive electrode active material, the conductive agent, and the binder in an appropriate solvent and applying this suspension to aluminum foil or aluminum alloy foil followed by drying and pressing, for example. A specific surface area of the positive electrode active material-containing layer according to BET method is preferably within a range of 0.1 to 2 m²/g.

The current collector is preferably aluminum foil or aluminum alloy foil. A thickness of the current collector may be 20 µm or less and is more preferably 15 µm or less.

### (Negative Electrode)

This negative electrode includes a negative electrode current collector and a negative electrode active material-containing layer which is held on one surface or both surfaces, on at least one primary surface out of two primary surfaces of the current collector and which includes a negative electrode active material, a conductive agent, and a binder.

A negative electrode having high electrochemical stability with respect to the inorganic solid-containing layer and having a small interface resistance is desirably used as the negative electrode.

Those capable of allowing lithium ions to be inserted in and to be extracted from are exemplified as the negative electrode active material. Examples of the negative electrode active material include lithium metal, a lithium alloy, a metal oxide, a metal sulfide, a metal fluoride, and a metal nitride. A titanium-containing metal oxide is preferable from the point of view of improving cycle life performance. Examples of the titanium-containing metal oxide include a lithium titanium-containing oxide, a titanium-containing oxide, and a titanium niobium-containing oxide. On the other hand, lithium metal and a lithium alloy are preferable from the point of view of increasing capacity. The inorganic solid-containing layer according to the approach can form a stable film at the interface with the negative electrode including lithium metal and/or a lithium alloy. Consequently, the cycle life performance and thermal stability of the secondary battery can be improved.

The negative electrode including a titanium-containing oxide as the negative electrode active material preferably capable of allowing lithium ions to be inserted in and to be extracted from at a potential ranging from 2.5 V (vs. Li/Li⁺) to 0.8 V (vs. Li/Li⁺) with respect to the electrode potential of lithium metal. When the negative electrode potential is within this range, a film stable at a high temperature is formed on the surface of the negative electrode active material, and therefore a nonaqueous electrolyte secondary battery having excellent lifetime performance under a high-temperature environment can be obtained. A more preferable range of the negative electrode potential is 2 V (vs. Li/Li⁺) to 1 V (vs. Li/Li⁺) . One kind or two or more kinds of the negative electrode active material can be used.

Examples of the lithium titanium-containing oxide include one having a spinel structure (for example, general formula Li_{4/3+a}Ti_{5/3}O₄ (0 ≤ a ≤ 2)); one having a ramsdellite structure (for example, general formula Li₂₊ₐTi₃O₇ (0 ≤ a ≤ 1)); Li_{1+b}Ti₂O₄ (0 ≤ b ≤ 1); Li_{1.1+b}Ti_{1.8}O₄ (0 ≤ b ≤ 1); Li_{1.07+b}Ti_{1.86}O₄ (0 ≤ b ≤ 1) ; a lithium titanium-containing composite oxide containing at least one element selected from the group consisting of Nb, Mo, W, P, V, Sn, Cu, Ni, and Fe; and the like.

In addition, examples of the lithium titanium-containing oxide include a lithium titanium-containing composite oxide represented by Li₂₊ₐA_{d}Ti_{6-b}B_{b}O_{14-c} (A is one or more elements selected from Na, K, Mg, Ca, and Sr; B is a metal element other than Ti; 0 ≤ a ≤ 5; 0 ≤ b ≤ 6; 0 ≤ c ≤ 0.6; 0 ≤ d ≤ 3). A crystal structure of the lithium titanium-containing composite oxide may be a crystal structure of a space group Cmca.

The titanium-containing oxide can be represented by a general formula LiₐTiO₂ (0 ≤ a ≤ 2). In this case, the compositional formula before charging is TiO₂. Examples of the titanium oxide include a titanium oxide with a monoclinic structure (bronze structure (B)), a titanium oxide with a rutile structure, a titanium oxide with an anatase structure, and the like. TiO₂ (B) with a monoclinic structure (bronze structure (B)) is preferable, and one having been heat-treated at a temperature of 300 to 600°C and having a low crystallinity is preferable.

Examples of the titanium niobium-containing oxide include one represented by general formula Li_{c}TiNb_{d}O₇ (0 ≤ c ≤ 5, 1 ≤ d ≤ 4) and the like. More preferably, the titanium niobium-containing oxide is represented by TiNb₂O₇.

Since a negative electrode that includes at least one selected from the group consisting of a lithium titanium oxide having a ramsdellite structure, a titanium oxide having a monoclinic structure, a niobium titanium-containing oxide having a monoclinic structure, and a lithium titanium-containing composite oxide represented by Li₂₊ₐA_{d}Ti_{6-b}B_{b}O_{14-c} allows a voltage curve of the battery to have an appropriate gradient, a state of battery charge (SOC) can be easily measured only by voltage monitoring. In addition, influence of variations among batteries is small also in a battery pack, and control by voltage monitoring alone can be made possible.

An average particle size of primary particles of the negative electrode active material is preferably within a range of 0.001 to 1 µm. As for particle shapes, good performance can be obtained in any of particulate form and fibrous form. In the case of fibrous form, a fiber diameter is preferably 1 µm or less.

The negative electrode active material desirably has an average particle size of 1 µm or less and a specific surface area according to BET method in terms of N₂ adsorption ranging from 3 to 200 m²/g. Consequently, affinity of the negative electrode with the nonaqueous electrolyte can be further enhanced.

The porosity of the negative electrode (except for the current collector) desirably ranges from 20 to 50%. Consequently, a negative electrode in which the affinity between the negative electrode and the nonaqueous electrolyte is excellent and the density is high can be obtained. A more preferable range of the porosity is 25 to 40%.

Examples of the negative electrode current collector include nickel foil, cupper foil, stainless steel foil, aluminum foil, and aluminum alloy foil. The negative electrode current collector is desirably aluminum foil or aluminum alloy foil. A negative electrode current collector in a mesh form can be used other than the foil form.

The thickness of the aluminum foil and the aluminum alloy foil is preferably 20 µm or less and more preferably 15 µm or less. The purity of the aluminum foil is preferably 99.99% or more. The aluminum alloy is preferably an alloy including an element such as magnesium, zinc, and silicon. On the other hand, the content of a transition metal such as iron, copper, nickel, and chromium is preferably 100 ppm or less.

Acetylene black, carbon black, coke (desirably having been heat-treated at a temperature of 800°C to 2000°C and having an average particles size of 10 µm or less), carbon nanotubes, carbon fibers, graphite, powder of a metal compound such as TiO, TiC, TiN, or the like, and powder of metal such as Al, Ni, Cu, Fe, or the like can be singly used or can be mixed and used as the conductive agent, for example. The electrode resistance is reduced and the cycle life performance is improved by using carbon nanotubes or carbon fibers having a fiber diameter of 1 µm or less.

Polytetrafluoroethylene (PTFE), polyvinylidene fluoride (PVdF), fluoro rubber, acrylic rubber, styrene-butadiene rubber, a core-shell binder, and a polyimide are exemplified as the binder, for example. One kind or two or more kinds of the binder may be used.

A blending ratio of the active material, the conductive agent, and the binder in the negative electrode active material-containing layer is preferably in the following range: 80 to 95% by weight of the negative electrode active material, 1 to 18% by weight of the conductive agent, and 2 to 7% by weight of the binder.

The negative electrode may include inorganic solid particles. This allows not only ion conductivity of the negative electrode to be good but also resistance between the negative electrode and the inorganic solid-containing layer to decrease. Specific examples of the inorganic solid particles will be described later. The content of the inorganic solid particles in the negative electrode active material-containing layer is desirably 10% by weight or less in order to increase weight energy density. A more preferable range is 1% by weight or more and 10% by weight or less. In addition, at least one selected from Al₂O₃, TiO₂, ZrO₂, an oxide-based inorganic solid electrolyte having lithium ion conductivity, and the like is preferably included in pores in the negative electrode in an amount of 1% by weight or more and 10% by weight or less as the inorganic solid particles. Consequently, resistance is reduced especially at a low temperature, and discharge characteristics are improved.

The negative electrode is produced by suspending the negative electrode active material, the conductive agent, and the binder in an appropriate solvent and applying this suspension to the current collector followed by drying and heat-pressing, for example.

An average particle size of the negative electrode active material is measured by the following method, for example. Measurements are conducted by a method in which about 0.1 g of a sample, a surfactant, and 1 to 2 mL of distilled water are firstly added to a beaker, sufficiently stirred, and consequently poured into a stirring water tank. A luminous intensity distribution is measured 64 times at intervals of two seconds, and size distribution data are analyzed using a laser diffraction particle size analyzer (SHIMADZU CORPORATION, laser diffraction particle size analyzer SALD-300).

BET specific surface areas of the negative electrode active material and the negative electrode in terms of N₂ adsorption are measured under the following conditions, for example. One gram of a powdery negative electrode active material or two 2 × 2 cm² pieces cut out from the negative electrode are used as a sample. A BET specific surface area measurement apparatus manufactured by YUASA IONICS Co. is used, and nitrogen gas is used as adsorption gas.

A porosity of the negative electrode is calculated by comparing a volume of the negative electrode active material-containing layer with a volume of the negative electrode active material-containing layer with a porosity of 0%, regarding the amount increased from the volume of the negative electrode active material-containing layer with a porosity of 0% as a pore volume. Incidentally, when the negative electrode active material-containing layer is formed on both surfaces of the current collector, the volume of the negative electrode active material-containing layer is the sum of the volumes of the negative electrode active material-containing layers on the both surfaces.

### (Inorganic Solid-Containing Layer)

The inorganic solid-containing layer contains a mixed solvent that includes a fluorinated carbonate and a fluorinated ether, a lithium salt dissolved in the mixed solvent, and inorganic solid particles. The inorganic solid-containing layer is at least disposed between the positive electrode and the negative electrode. The inorganic solid-containing layer may include a part facing only the positive electrode or a part facing only the negative electrode or both of them.

The inorganic solid-containing layer may be a layer in which a nonaqueous electrolyte including the mixed solvent and the lithium salt is held in a porous layer mainly including aggregated inorganic solid particles, and the inorganic solid-containing layer may include a member other than these.

Fluorinated carbonates are excellent in oxidation resistance. Meanwhile, fluorinated ethers are low in viscosity. In addition, both of fluorinated carbonates and fluorinated ethers are non-flammable. Therefore, the mixed solvent that includes a fluorinated carbonate and a fluorinated ether can suppress oxidative decomposition of the nonaqueous electrolyte at a high temperature and a high potential and is easily dispersed in gaps between the inorganic solid particles. A weight ratio between the fluorinated carbonate and the fluorinated ether is preferably within a range of 1:1 to 9:1. When the weight of the fluorinated carbonate is less than the weight of the fluorinated ether, oxidation resistance of the nonaqueous electrolyte deteriorates. On the other hand, when the weight of the fluorinated carbonate is more than the weight of the fluorinated ether, the viscosity of the mixed solvent increases. A solvent in which the fluorinated carbonate and the fluorinated ether are mixed in the weight ratio ranging from 1:1 to 9:1 has a high oxidation resistance, can decrease the viscosity of the electrolyte and enhance ion conductivity of the electrolyte, and can enhance the cycle life performance and thermal stability of the secondary battery.

The fluorinated carbonate preferably includes at least one selected from the group consisting of fluoroethylene carbonate (FEC), difluoroethylene carbonate (DFEC), trifluoroethyl methyl carbonate (FEMC), trifluorodiethyl carbonate (FDEC), and trifluorodimethyl carbonate (FDMC).

The fluorinated ether preferably includes at least one selected from the group consisting of 1,1,2,2-tetrafluoroethyl-2,2,2-trifluoroethyl ether (TFTrEE), 1,1,2,2-tetrafluoroethyl-2,2,3,3-tetrafluoropropyl ether (TFTFPE), bis(2,2,2-trifluoroethyl) ether (BTrFEE), bis(1,1,2,2-tetrafluoroethyl) ether (BTFEE), and ethyl 1,1,2,2-tetrafluoroethyl ether (TFEE).

Examples of the lithium salt include LiBF₄, LiPF₆, LiAsF₆, LiClO₄, LiCF₃SO₃, LiN(FSO₂)₂, LiN(CF₃SO₂)₂, LiN(C₂F₅SO₂)₂, Li(CF₃SO₂)₃C, LiB[(OCO)₂]₂, and the like. One kind or two or more kinds of the lithium salt can be used. The amount of the lithium salt dissolved into a solvent is preferably 1 mol/L or more and 5 mol/L or less. It is preferable that at least one selected from the group consisting of LiBF₄, LiPF₆, and LiN(FSO₂)₂ is included among them. Consequently, the chemical stability, oxidation resistance and reduction resistance in particular of the mixed solvent can be enhanced, and the resistance of the film formed on the negative electrode can be reduced.

The mixed solvent can contain another organic solvent. Examples of another organic solvent include cyclic carbonates such as ethylene carbonate (EC) and propylene carbonate (PC); linear carbonates such as diethyl carbonate (DEC), methyl ethyl carbonate (MEC), and dimethyl carbonate (DMC); ethers such as dimethoxyethane (DME), diethoxyethane (DEE), γ-butyrolactone (GBL), and α-methyl-γ-butyrolactone (MBL); and phosphoric acid esters such as trimethyl phosphate (PO(OCH₃)₃), triethyl phosphate (PO(OC₂H₅)₃), and tripropyl phosphate (PO(OC₄H₉)₃). When the mixed solvent includes a cyclic carbonate and/or a linear carbonate as a first solvent, the content of the first solvent in the mixed solvent is desirably 50% by weight or less. In addition, when the mixed solvent includes an ether and/or a phosphoric acid ester as a second solvent, content of the second solvent in the mixed solvent is desirably 30% by weight or less. Consequently, an increase in resistance against ion conductivity under a low-temperature environment is suppressed, and discharge characteristics at a low temperature (-30°C or lower) can be improved.

The nonaqueous electrolyte may be a liquid electrolyte in which a lithium salt is dissolved in the mixed solvent, but may be a gel electrolyte in which a liquid electrolyte and a polymer material are mixed. Polyvinylidene fluoride (PVdF), polyacrylonitrile (PAN), polyethylene oxide (PEO), and the like can be exemplified as the polymer material, for example. In addition, the nonaqueous electrolyte can contain a room-temperature molten salt including a nonvolatile and non-flammable ionic liquid.

The inorganic solid particles may be an oxide and/or a sulfide which are stable with respect to the positive electrode and the negative electrode. The inorganic solid particles are desirably particles of an oxide-based solid electrolyte having lithium ion conductivity.

Examples of inorganic solid particles not showing lithium ion conductivity include Al₂O₃ particles, TiO₂ particles, and ZrO₂ particles.

Examples of the inorganic solid electrolyte with lithium ion conductivity (also referred to as a lithium-ion conductor) include an oxide solid electrolyte with a garnet-type structure and a lithium phosphoric acid solid electrolyte with a NASICON-type structure. The oxide solid electrolyte with a garnet-type structure has advantages of a high lithium ion conductivity, a high reduction resistance, and a wide electrochemical window. Examples of the oxide solid electrolyte with a garnet-type structure include La₅₊ₓAₓLa₃₋ₓM₂O₁₂ (A is at least one selected from the group consisting of Ca, Sr, and Ba; and M is at least one selected from the group consisting of Nb and Ta), Li₃M₂₋ₓL₂O₁₂ (M is at least one selected from the group consisting of Ta and Nb; and L is Zr), Li₇₋₃ₓAlₓLa₃Zr₃O₁₂, and Li₇La₃Zr₂O₁₂. Among them, Li_{6.25}Al_{0.25}La₃Zr₃O₁₂ and Li₇La₃Zr₂O₁₂ each have a high ion conductivity and are electrochemically stable, and therefore are excellent in discharge characteristics and cycle life performance. Further, Li_{6.25}Al_{0.25}La₃Zr₃O₁₂ and Li₇La₃Zr₂O₁₂ are chemically stable with respect to the mixed solvent even when they are fine particles having a specific surface area of 50 to 500 m²/g. It is preferable that x is within a range of 0 or more and 0.5 or less.

The lithium phosphoric acid solid electrolyte with a NASICON-type structure is stable even in the presence of moisture, specifically in the air. Examples of the lithium phosphoric acid solid electrolyte with a NASICON-type structure include Li₁₊ₓM₂(PO₄)₃ (M is at least one selected from the group consisting of Ti, Ge, Zr, Al, and Ca; x is within a range of 0 or more and 0.5 or less). Li₁₊ₓAlₓGe₂₋ₓ(PO₄)₃, Li₁₊ₓAlₓZr₂₋ₓ(PO₄)₃, and Li₁₊ₓAl_{X}Ti₂₋ₓ(PO₄)₃ have a high ion conductivity and have a high electrochemical stability, and therefore are preferable. It is preferable that x is within a range of 0 or more and 0.5 or less.

One kind or two or more kinds of the inorganic solid particles can be used.

The average particle size of the inorganic solid particles is desirably 1 µm or less. The lower limit of the average particle size can be 0.05 µm.

The content of the inorganic solid particles in the inorganic solid-containing layer can be within a range of 50% by weight or more and 99% by weight or less.

The inorganic solid-containing layer may contain a binder. Examples of the binder include polyacrylonitrile (PAN), polyethylene oxide (PEO), Polyvinylidene fluoride (PVdF), polymethyl methacrylate, cellulose, rubber, and the like. One kind or two or more kinds of the binder can be used. The content of the binder in the inorganic solid-containing layer can be within a range of 1% by weight or more and 10% by weight or less.

The thickness of the inorganic solid-containing layer can be within a range of 1 µm or more and 30 µm or less.

The inorganic solid-containing layer is produced by the following method, for example. The inorganic solid-containing layer is obtained by dispersing the inorganic solid particles and the binder in a solvent, applying the obtained slurry to a surface of an electrode (a surface of the positive electrode or the negative electrode, for example) followed by drying and subsequent impregnation with the nonaqueous electrolyte.

The nonaqueous electrolyte may be held in pores in the inorganic solid-containing layer. When the nonaqueous electrolyte is held between the inorganic solid particles, a decrease in lithium ion mobility under a low-temperature environment is suppressed and performance at a low temperature of the secondary battery improves. The porosity of the inorganic solid-containing layer is preferably 5% by volume or more and 50% by volume or less. In addition, it is preferable that the inorganic solid particles are also present in pores of the positive electrode and the negative electrode.

An identification method of components of the mixed solvent will be described below.

First, a secondary battery to be measured is discharged at 1C until a voltage of the battery becomes 1.0 V. The discharged secondary battery is disassembled in a glove box under an inert atmosphere. Next, the nonaqueous electrolyte included in the battery and electrode group is extracted. When the nonaqueous electrolyte can be taken out from the part at which the battery has been opened, the nonaqueous electrolyte is directly sampled. On the other hand, when the nonaqueous electrolyte to be sampled is held in the electrode group, the electrode group is disassembled, and a separator impregnated with the nonaqueous electrolyte is taken out, for example. The nonaqueous electrolyte with which the separator is impregnated can be extracted by using a centrifugal separator or the like, for example. Sampling of the nonaqueous electrolyte can be performed as above. Incidentally, when an amount of the nonaqueous electrolyte included in the nonaqueous electrolyte battery is small, the nonaqueous electrolyte can also be extracted by immersing the electrode and the separator in an acetonitrile solution. The amount extracted can be calculated by measuring the weight of the acetonitrile solution before and after extraction.

The sample of the nonaqueous electrolyte thus obtained is provided for gas chromatography mass spectrometry (GC-MS) or nuclear magnetic resonance spectrometry (NMR), for example, to perform composition analysis. On analysis, kinds of the fluorinated carbonate and the fluorinated ether are firstly identified. Then, calibration curves of the fluorinated carbonate and the fluorinated ether are created. When a plurality of kinds is included, a calibration curve of each ester is created. A weight ratio between the fluorinated carbonate and the fluorinated ether in the mixed solvent can be calculated by comparing the created calibration curves with peak intensities or areas in results obtained from measurement of a nonaqueous electrolyte sample.

The secondary battery can further include any of a separator, a container, a positive electrode terminal, and a negative electrode terminal.

### (Separator)

A separator can be disposed between the positive electrode and the negative electrode. At least one surface, for example, primary surface of the separator contacts the inorganic solid-containing layer. The separator may be integrated in the inorganic solid-containing layer but may be integrated in the positive electrode or the negative electrode or both electrodes. The mechanical strength of the inorganic solid-containing layer can be compensated with the separator by integrating the separator in the inorganic solid-containing layer.

A synthetic resin-made nonwoven fabric, a polyethylene porous film, a polypropylene porous film, a cellulose-made nonwoven fabric, and the like can be exemplified as the separator, for example. The thickness of the separator may be 20 µm or less and is preferably 2 µm or more and 5 µm or less. In addition, polymer fibers may be directly stacked to at least one of the positive electrode and the negative electrode as the separator by electrospinning for electrical insulation.

Since the inorganic solid-containing layer is disposed at least between the positive electrode and the negative electrode, it is desirable that the surface, for example, the primary surface of the inorganic solid-containing layer faces the positive electrode and the surface, for example, the primary surface of the separator faces the negative electrode. The primary surfaces of the inorganic solid-containing layer are two surfaces which define a thickness of the inorganic solid-containing layer.

### (Container)

A metal container and a stacked film container can be used as the container storing the positive electrode, the negative electrode, and the inorganic solid-containing layer.

A metallic can which is made of aluminum, aluminum alloy, iron, stainless steel, or the like and which has a shape of square form or a cylindrical form can be used as the metal container. In addition, the sheet thickness of the container is desirably 0.5 mm or less, and a more preferable range thereof is 0.3 mm or less.

A multilayer film in which stainless steel foil or aluminum foil is covered with a resin film and the like can be exemplified as the stacked film, for example. Polymers such as polypropylene (PP), polyethylene (PE), nylon, and polyethylene terephthalate (PET) can be used as the rein. In addition, the thickness of the stacked film is preferably 0.2 mm or less. The purity of the aluminum foil is preferably 99.5% or more.

In addition, a large-size, thin, cup-molded body can be used as the container using stainless steel foil (thickness of 0.1 to 0.3 mm) without resin film coating.

A metallic can made of aluminum alloy is preferably an alloy containing an element such as manganese, magnesium, zinc, and silicon and having an aluminum purity of 99.8% or less. As the strength of the metallic can made of aluminum alloy significantly increases, the wall thickness of the can can be thinned. As a result, a thin and light battery having a high output and excellent heat dissipation can be achieved.

### (Negative electrode terminal)

The negative electrode terminal can be formed from a material which has conductivity and is electrochemically stable at a potential at which the negative electrode active material allows Li to be inserted in and to be extracted from. Specifically, copper, nickel, stainless steel, or aluminum, or an aluminum alloy including at least one element selected from the group consisting of Mg, Ti, Zn, Mn, Fe, Cu, and Si is exemplified as the material for the negative electrode terminal. Aluminum or an aluminum alloy is preferably used as the material for the negative electrode terminal. The negative electrode terminal preferably includes a similar material to that of the negative electrode current collector so as to reduce contact resistance with the negative electrode current collector.

### (Positive electrode terminal)

The positive electrode terminal can be formed from a material which has conductivity and is electrically stable in the potential range of 3 V or more and 4.5 V or less (vs. Li/Li⁺) with respect to the redox potential of lithium. Aluminum or an aluminum alloy including at least one element selected from the group consisting of Mg, Ti, Zn, Mn, Fe, Cu, and Si is exemplified as the material for the positive electrode terminal. The positive electrode terminal is preferably formed from a similar material to that of the positive electrode current collector so as to reduce contact resistance with the positive electrode current collector.

The secondary battery of the approach can be applied to secondary batteries of various types such as square-type, cylindrical-type, flat-type, thin-type, coin-type, and the like. Further, the secondary battery preferably has a bipolar structure. Consequently, there is an advantage that a secondary battery having a volume equivalent to a plurality of cells connected in series can be produced from one cell.

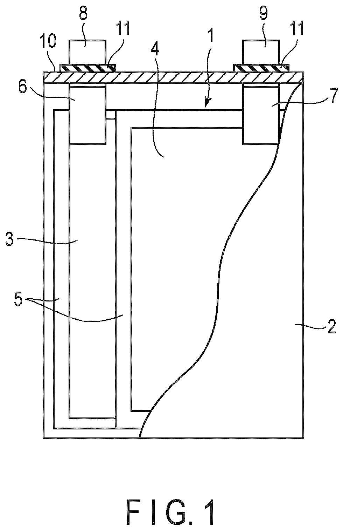

An example of the secondary battery according to the approach will be described with reference to FIGS. 1, 2, 3, 4, and 5.

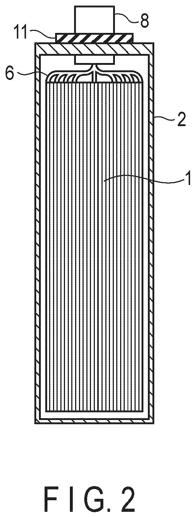

FIGS. 1 and 2 show an example of the secondary battery using a metal container.

An electrode group 1 is stored in a rectangular tubular metal container 2. The electrode group 1 has a structure formed by spirally winding the positive electrode active material-containing layer of a positive electrode 3 and the negative electrode active material-containing layer of a negative electrode 4 with an inorganic solid-containing layer 5 interposing therebetween so as to form a flat shape. The inorganic solid-containing layer 5 covers the surface (principal surface) of the positive electrode active material-containing layer or negative electrode active material-containing layer. As shown in FIG. 2, a strip-shaped positive electrode lead 6 is electrically connected to each of a plurality of portions at an end of the positive electrode 3 located on an end face of the electrode group 1. A strip-shaped negative electrode lead 7 is electrically connected to each of a plurality of portions at an end of the negative electrode 4 located on the end face. The plurality of positive electrode leads 6 are bundled, and in this state, electrically connected to a positive electrode tab 8. A positive electrode terminal is formed from the positive electrode leads 6 and the positive electrode tab 8. In addition, the negative electrode leads 7 are bundled, and in this state, connected to a negative electrode tab 9. A negative electrode terminal is formed from the negative electrode leads 7 and the negative electrode tab 9. A sealing plate 10 made of a metal is fixed to the opening portion of the metal container 2 by welding or the like. The positive electrode tab 8 and the negative electrode tab 9 are extracted to the outside from outlet holes formed in the sealing plate 10, respectively. The inner circumference surface of each outlet hole of the sealing plate 10 is covered with an insulating member 11 to avoid a short circuit caused by contact between the positive electrode tab 8 and the negative electrode tab 9.

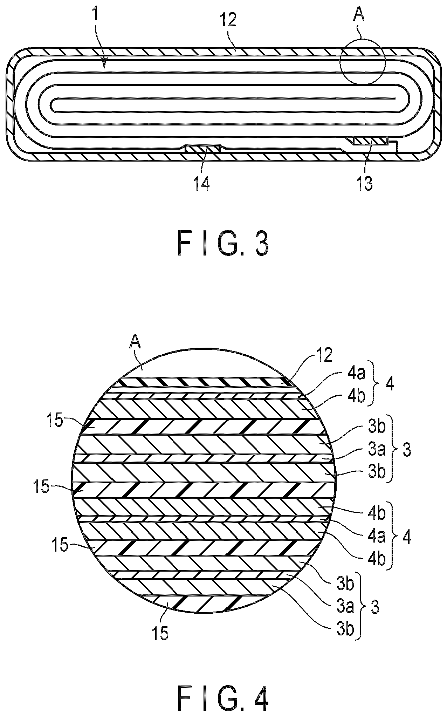

FIGS. 3 and 4 show an example of a secondary battery using a container member made of a laminated film.

As shown in FIGS. 3 and 4, the flat wound electrode group 1 is stored in a sack-shaped container member 12 made of a laminated film including a metal layer interposing between two resin films. The flat wound electrode group 1 is formed by spirally winding a stacked structure obtained by stacking the negative electrode 4, a inorganic solid-containing layer 15, the positive electrode 3, and the inorganic solid-containing layer 15 from the outside, and pressing the stacked structure. The inorganic solid-containing layer 15 covers the surface (principal surface) of the positive electrode active material-containing layer or negative electrode active material-containing layer. The outermost negative electrode 4 has an arrangement in which a negative electrode layer (negative electrode active material-containing layer) 4b containing a negative electrode active material on one surface on the inner side of a negative electrode current collector 4a, as shown in FIG. 4, and the remaining negative electrodes 4 are arranged by forming the negative electrode layers 4b on both surfaces of the negative electrode current collector 4a. The positive electrode 3 is arranged by forming positive electrode layers (positive electrode active material-containing layers) 3b on both surfaces of a positive electrode current collector 3a.

Near the outer end of the wound electrode group 1, a negative electrode terminal 13 is electrically connected to the negative electrode current collector 4a of the outermost negative electrode 4, and a positive electrode terminal 14 is electrically connected to the positive electrode current collector 3a of the positive electrode 3 on the inner side. The negative electrode terminal 13 and the positive electrode terminal 14 extend outward from the opening portion of the sack-shaped container 12. The opening portion of the sack-shaped container 12 is heat-sealed, thereby sealing the wound electrode group 1. At the time of heat-sealing, the negative electrode terminal 13 and the positive electrode terminal 14 are sandwiched by the sack-shaped container member 12 in the opening portion.

A separator may be used in addition to the inorganic solid-containing layers 5 and 15.

Next, a secondary battery having a bipolar structure will be described. The secondary battery further includes a current collector having a first surface and a second surface located at the opposite side of the first surface. Those similar to the positive electrode current collector or the negative electrode current collector of the secondary battery can be used as the current collector. The secondary battery has a bipolar structure in which a positive electrode active material-containing layer is formed on the first surface of the current collector and a negative electrode active material-containing layer is formed on the second surface of the current collector. The inorganic solid-containing layer is present on a surface of at least one of the positive electrode active material-containing layer and the negative electrode active material-containing layer. As a result, at least a part of the inorganic solid-containing layer is located between the positive electrode active material-containing layer and the negative electrode active material-containing layer. Those similar to that described in the secondary battery can be used for the positive electrode active material-containing layer and the negative electrode active material-containing layer.

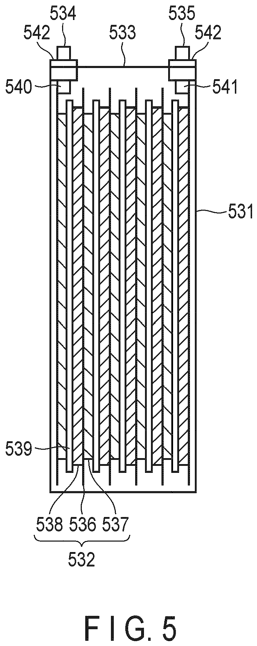

FIG. 5 shows an example of a bipolar secondary battery. The secondary battery shown in FIG. 5 includes a metal container 531, an electrode body 532 having a bipolar structure, a sealing plate 533, a positive electrode terminal 534, and a negative electrode terminal 535. The metal container 531 has a bottomed square tubular shape. As the metal container, a metal container similar to that described above is usable. The electrode body 532 having the bipolar structure includes a current collector 536, a positive electrode active material-containing layer 537 stacked on one surface (first surface) of the current collector 536, and a negative electrode active material-containing layer 538 stacked on the other surface (second surface) of the current collector 536. An inorganic solid- containing layer 539 is arranged between the electrode bodies 532 each having the bipolar structure. The positive electrode terminal 534 and the negative electrode terminal 535 are fixed to the sealing plate 533 via an insulating member 542. One end of a positive electrode lead 540 is electrically connected to the positive electrode terminal 534 and the other end is electrically connected to the current collector 536. One end of a negative electrode lead 541 is electrically connected to the negative electrode terminal 535 and the other end is electrically connected to the current collector 536.

Since the secondary battery of the first approach described above includes an inorganic solid-containing layer containing a mixed solvent that includes a fluorinated carbonate and a fluorinated ether, a lithium salt dissolved in the mixed solvent, and inorganic solid particles, excellent charge-and-discharge cycle life, high-temperature durability, and performance at a low temperature can be achieved.

### (Second Approach)

A battery module of a second approach includes the secondary battery of the first approach, with the number of the secondary batteries being more than one.

Examples of the battery module can include one including a plurality of single batteries electrically connected in series and/or in parallel as a structural unit, one including a first unit that includes a plurality of single batteries electrically connected in series or a second unit that includes a plurality of single batteries electrically connected in parallel, and the like. The battery module may include at least one form of these configurations.

Examples of the form in which a plurality of secondary batteries is electrically connected in series and/or in parallel include one in which secondary batteries each provided with a container member are electrically connected in series and/or in parallel, and one in which a plurality of battery groups or bipolar electrode bodies are electrically connected in series and/or in parallel, and are stored in a common housing. A specific example of the former is one in which positive electrode terminals and negative electrode terminals of the secondary batteries are connected by bus bar made of metal (for example, aluminum, nickel, or cupper). A specific example of the latter is one in which a plurality of electrode groups or bipolar electrode bodies is stored in one housing in a state of being electrochemically insulated by a partition wall, and the electrode groups or bipolar electrode bodies are electrically connected in series. In a case of a secondary battery, when the number of the batteries electrically connected in series is within a range of 5 to 7, compatibility with voltage of lead storage batteries becomes good. In order to further enhance the compatibility with voltage of lead storage batteries, a configuration in which five or six single batteries are connected in series is preferable.

A metallic can made of aluminum alloy, iron, stainless steel, or the like, a plastic container, and the like can be used as the housing for storing the battery module. In addition, the wall thickness of the housing is desirably 0.5 mm or more.

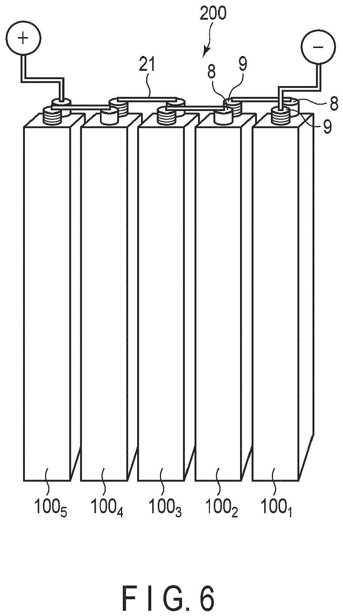

An example of a battery module will be described with reference to FIG. 6. A battery module 200 shown in FIG. 6 includes, as single batteries, a plurality of rectangular secondary batteries 100₁ to 100₅ shown in FIG. 1. A positive electrode tab 8 of the battery 100₁ and a negative electrode tab 9 of the battery 100₂ located adjacent to the battery 100₁ are electrically connected by a lead or bus bar 21. In addition, a positive electrode tab 8 of the battery 100₂ and a negative electrode tab 9 of the battery 100₃ located adjacent to the battery 100₂ are electrically connected by a lead or bus bar 21. The batteries 100₁ to 100₅ are thus electrically connected in series.

Since the battery module of the second approach described above includes the secondary batteries of the first approach, excellent charge-and-discharge cycle life, high-temperature durability, and performance at a low temperature can be achieved.

### (Third Approach)

A battery pack according to a third approach can include as the single battery the secondary battery according to the first approach, with the number of the secondary batteries being one or more than one. A plurality of secondary batteries can also be electrically connected in series, in parallel, or by a combination of serial and parallel connection to configure a battery module. The battery pack according to the third approach may include a plurality of battery modules.

The battery pack according to the third approach can further include a protective circuit. The protective circuit has a function of controlling charge-and-discharge of the secondary battery. Alternatively, a circuit included in a device (for example, an electronic device, an automobile, or the like) which uses the battery pack as a power source can be used as the protective circuit of the battery pack.

Moreover, the battery pack according to the third approach may further include an external power distribution terminal. The external power distribution terminal is configured to externally output current from the battery, and/or to input external current into the battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the third approach will be described with reference to the drawings.

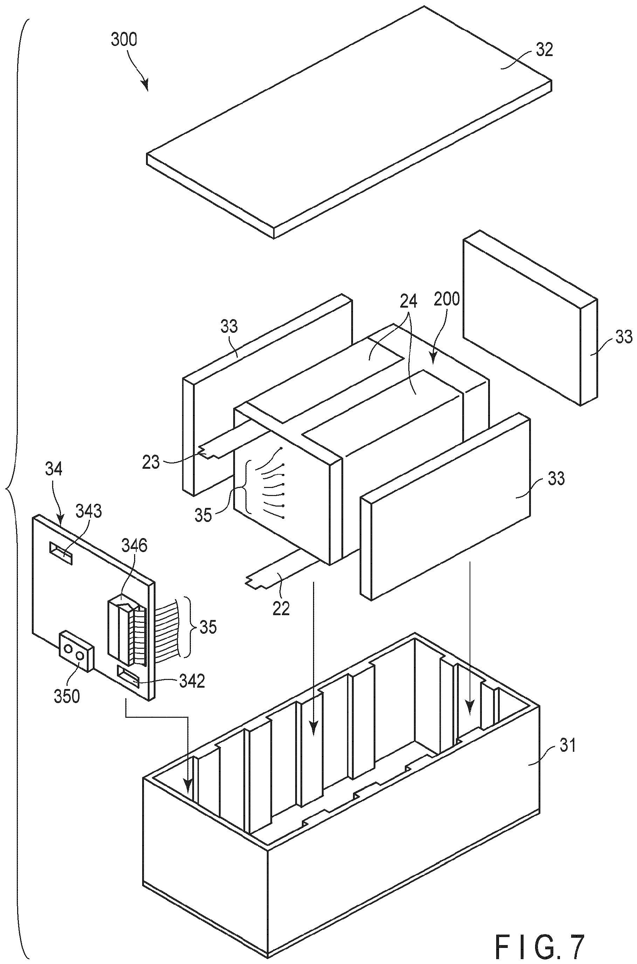

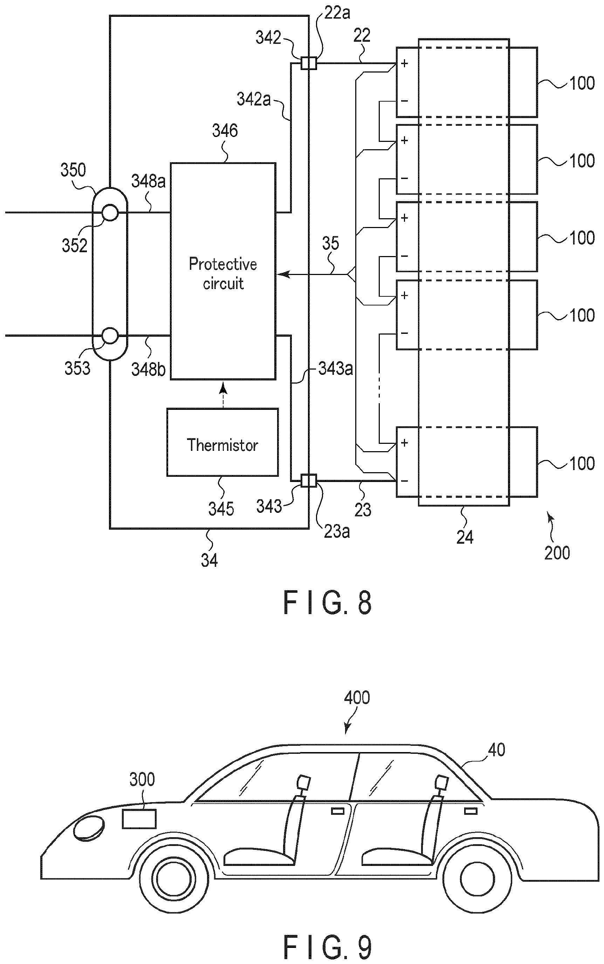

FIG. 7 is an exploded perspective view schematically showing an example of the battery pack according to the third approach. FIG. 8 is a block diagram showing an example of an electric circuit of the battery pack shown in FIG. 7.

A battery pack 300 shown in FIGS. 7 and 8 includes a housing container 31, a lid 32, protective sheets 33, a battery module 200, a printed wiring board 34, wires 35, and an insulating plate (not shown).

The housing container 31 shown in FIG. 7 is a square-bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes plural single-batteries 100, a positive electrode-side lead 22, a negative electrode-side lead 23, and adhesive tape(s) 24.

At least one of the plural single-batteries 100 is a battery according to the first approach. The plural single-batteries 100 are electrically connected in series, as shown in FIG. 8. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape(s) 24 fastens the plural single-batteries 100. The plural single-batteries 100 may be fixed using a heat shrinkable tape in place of the adhesive tape(s) 24. In this case, protective sheets 33 are arranged on both side surfaces of the battery module 200, and the heat shrinkable tape is wound around the battery module 200 and protective sheets 33. After that, the heat shrinkable tape is shrunk by heating to bundle the plural single-batteries 100.

One end of the positive electrode-side lead 22 is connected to the battery module 200. The one end of the positive electrode-side lead 22 is electrically connected to the positive electrode(s) of one or more single-battery 100. One end of the negative electrode-side lead 23 is connected to the battery module 200. The one end of the negative electrode-side lead 23 is electrically connected to the negative electrode(s) of one or more single-battery 100.

The printed wiring board 34 is provided along one face in the short side direction among the inner surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side (positive-side) wiring 348a, and a minus-side (negative-side) wiring 348b. One principal surface of the printed wiring board 34 faces a surface of the battery module 200. An insulating plate (not shown) is disposed in between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode side connector 343.

The thermistor 345 is fixed to one principal surface of the printed wiring board 34. The thermistor 345 detects the temperature of each single-battery 100 and transmits detection signals to the protective circuit 346.

The external power distribution terminal 350 is fixed to the other principal surface of the printed wiring board 34. The external power distribution terminal 350 is electrically connected to device(s) that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plural single-batteries 100. The protective circuit 346 is also configured to cut-off electric connection between the protective circuit 346 and the external power distribution terminal 350 (positive-side terminal 352, negative-side terminal 353) to external device(s), based on detection signals transmitted from the thermistor 345 or detection signals transmitted from each single-battery 100 or the battery module 200.

An example of the detection signal transmitted from the thermistor 345 is a signal indicating that the temperature of the single-battery(s) 100 is detected to be a predetermined temperature or more. An example of the detection signal transmitted from each single-battery 100 or the battery module 200 include a signal indicating detection of over-charge, over-discharge, and overcurrent of the single-battery 100. When detecting over charge or the like for each of the single batteries 100, the battery voltage may be detected, or a positive electrode potential or negative electrode potential may be detected. In the latter case, a lithium electrode to be used as a reference electrode may be inserted into each single battery 100.

Note, that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal and negative-side terminal of the external power distribution terminal.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles and railway cars. An example of the electronic device is a digital camera. The battery pack is particularly favorably used as an onboard battery.

The battery pack according to the third approach is provided with the secondary battery according to the first approach or the battery module according to the second approach. Accordingly, the battery pack can exhibit excellent charge-and-discharge cycle life, excellent high-temperature durability, and excellent performance at a low temperature.

### [Fourth Approach]

According to a fourth approach, a vehicle is provided. The battery pack according to the third approach is installed on this vehicle.

In the vehicle according to the fourth approach, the battery pack is configured, for example, to recover regenerative energy from motive force of the vehicle. The vehicle may include a mechanism (e.g., a regenerator) configured to convert kinetic energy of the vehicle into regenerative energy.

Examples of the vehicle according to the fourth approach include two-wheeled to four-wheeled hybrid electric automobiles, two-wheeled to four-wheeled electric automobiles, electrically assisted bicycles, and railway cars.

In the vehicle according to the fourth approach, the installing position of the battery pack is not particularly limited. For example, when installing the battery pack on an automobile, the battery pack may be installed in the engine compartment of the automobile, in rear parts of the vehicle body, or under seats.

The vehicle according to the fourth approach may have plural battery packs installed. In such a case, batteries included in each of the battery packs may be electrically connected to each other in series, electrically connected in parallel, or electrically connected in a combination of in-series connection and in-parallel connection. For example, in a case where each battery pack includes a battery module, the battery modules may be electrically connected to each other in series, electrically connected in parallel, or electrically connected in a combination of in-series connection and in-parallel connection. Alternatively, in a case where each battery pack includes a single battery, each of the batteries may be electrically connected to each other in series, electrically connected in parallel, or electrically connected in a combination of in-series connection and in-parallel connection.

An example of the vehicle according to the fourth approach is explained below, with reference to the drawings.

FIG. 9 is a partially see-through diagram schematically showing an example of a vehicle according to the fourth approach.

A vehicle 400, shown in FIG. 9 includes a vehicle body 40 and a battery pack 300 according to the third approach. In the example shown in FIG. 9, the vehicle 400 is a four-wheeled automobile.

This vehicle 400 may have plural battery packs 300 installed. In such a case, the batteries (e.g., single-batteries or battery module) included in the battery packs 300 may be connected in series, connected in parallel, or connected in a combination of in-series connection and in-parallel connection.

In FIG. 9, depicted is an example where the battery pack 300 is installed in an engine compartment located at the front of the vehicle body 40. As mentioned above, for example, the battery pack 300 may be alternatively installed in rear sections of the vehicle body 40, or under a seat. The battery pack 300 may be used as a power source of the vehicle 400. The battery pack 300 can also recover regenerative energy of motive force of the vehicle 400.

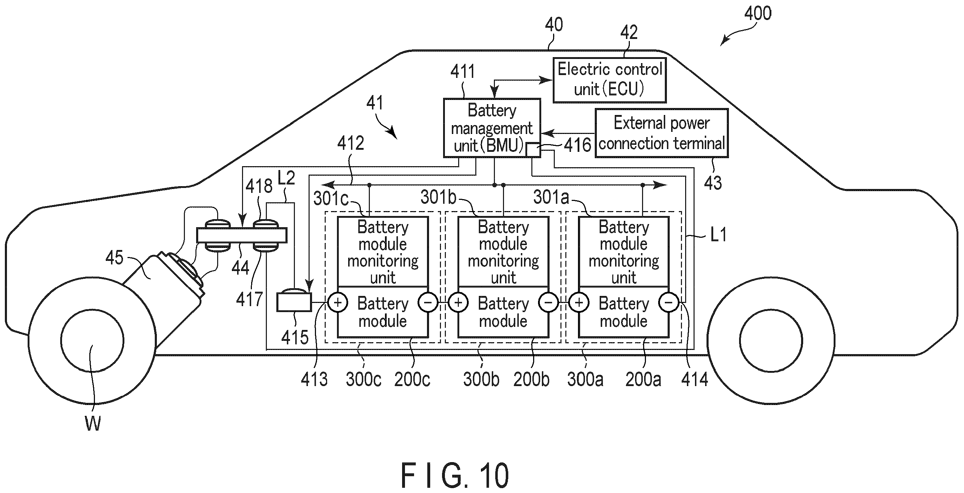

Next, with reference to FIG. 10, an aspect of operation of the vehicle according to the fourth approach is explained.

FIG. 10 is a diagram schematically showing an example of a control system related to an electric system in the vehicle according to the fourth approach. A vehicle 400, shown in FIG. 10, is an electric automobile.

The vehicle 400, shown in FIG. 10, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 10, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The battery pack 300a includes a battery module 200a and a battery module monitoring unit 301a (e.g., a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the aforementioned battery pack 300, and the battery modules 200a to 200c are battery modules similar to the aforementioned battery module 200. The battery modules 200a to 200c are electrically connected in series. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the first approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages or temperatures for each of the single-batteries 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In communication bus 412, a set of communication lines is shared at multiple nodes (i.e., the battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 10) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal provided to a coil disposed near the switch elements. The magnetic contactor such as the switch unit 415 is controlled based on control signals from the battery management unit 411 or the vehicle ECU 42, which controls the operation of the entire vehicle 400.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 is controlled based on control signals from the battery management unit 411 or the vehicle ECU 42, which controls the entire operation of the vehicle. Due to the inverter 44 being controlled, output voltage from the inverter 44 is adjusted.

The drive motor 45 is rotated by electric power supplied from the inverter 44. The drive generated by rotation of the motor 45 is transferred to an axle and driving wheels W via a differential gear unit, for example.

The vehicle 400 also includes a regenerative brake mechanism (i.e., a regenerator), though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The converted direct current is inputted into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. A current detector (current detecting circuit) 416 in the battery management unit 411 is provided on the connecting line L1 in between the negative electrode terminal 414 and negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The switch unit 415 is provided on the connecting line L2 in between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, switch unit 415, inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the security of the vehicle power source 41, such as a remaining capacity of the vehicle power source 41, are transferred between the battery management unit 411 and the vehicle ECU 42 via communication lines.

The vehicle according to the fourth approach is installed with the battery pack according to the third approach. Accordingly, a vehicle excellent in traveling performance in a wide temperature range from a low temperature to a high temperature can be achieved.

### (Examples)

Hereinafter, Examples of the present invention will be described in detail with reference to drawings, but the present invention is not limited to the Examples provided below.

### (Example 1)

As the positive electrode active material, lithium nickel cobalt manganese composite oxide particles which had a layered structure, was represented by LiNi_{0.8}CO_{0.1}Mn_{0.1}O₂, and had an average particle size of 0.05 µm, with 0.1% by weight of MgO fine particles having an average particle size of 0.05 µm formed on the surfaces thereof were prepared. To 87% by weight of the positive electrode active material, each of 5% by weight of graphite powder as a conductive material, 5% by weight of Li_{1.3}Al_{0.3}Zr_{1.7}(PO₄)₃ powder as the lithium-ion conductor (inorganic solid particles), 3% by weight of PVdF as the binder was added. Each amount blended is a value based on the positive electrode active material-containing layer as 100% by weight. After the mixed powder thereof was dispersed in n-methylpyrrolidone (NMP) solvent to prepare slurry, the slurry was applied to both surfaces of aluminum alloy foil (purity: 99%) having a thickness of 15 µm followed by drying and pressing to produce a positive electrode in which the amount coated on one side was 15 mg/cm², the thickness of one side of the positive electrode active material-containing layer was 50 µm, and the electrode density was 3.1 g/cm³. The specific surface area of the positive electrode active material-containing layer was 0.5 m²/g.

An inorganic solid-containing layer having a thickness of 10 µm was produced on the surface of the produced electrode according to the following method. In n-methylpyrrolidone (NMP) solvent, Li_{1.3}Al_{0.3}Zr_{1.7}(PO₄)₃ particles having an average particle size of 0.4 µm as the lithium-ion conductor (inorganic solid particles) and PVdF as the binder were dispersed so that the weight ratio therebetween became 98:2 to prepare slurry, the obtained slurry was applied to the surface of the positive electrode active material-containing layer and dried to coat the surface of the positive electrode active material-containing layer with the inorganic solid-containing layer having a thickness of 10 µm. The porosity of the inorganic solid-containing layer was 50%.

In addition, titanium niobium oxide (TiNb₂O₇) powder which has an average particle size of 0.8 µm, a BET specific surface area of 5 m²/g, a potential at which Li is inserted of 1.56 V (vs. Li/Li⁺), and a monoclinic structure, carbon nanotube powder having an average fiber diameter of 20 nm, graphite, Li_{1.3}Al_{0.3}Zr_{1.7}(PO₄)₃ as the lithium-ion conductor, acetylene black powder, and PVdF as the binder were blended in a weight ratio of 90:2:2:2:2:2 and dispersed in n-methylpyrrolidone (NMP) solvent followed by stirring under the condition in which a rotational speed was 1000 rpm, and a stirring time of two hours using a ball mill to prepare slurry. The obtained slurry was applied to aluminum alloy foil (purity: 99.3%) having a thickness of 15 µm followed by drying and heat-pressing to produce a negative electrode in which the amount coated on one side was 15 mg/cm², the thickness of one side of the negative electrode active material-containing layer was 68 µm, and the electrode density was 2.7 g/cm³. The porosity of the negative electrode except the current collector was 35%. In addition, the BET specific surface area of the negative electrode active material-containing layer (a surface area per one gram of the negative electrode active material-containing layer) was 10 m²/g.

The positive electrode and the negative electrode in which the positive electrode active material-containing layer was coated with the inorganic solid-containing layer were superposed so that the inorganic solid-containing layer was interposed therebetween and that the positive electrode active material-containing layer covered the negative electrode active material-containing layer. They were spirally wound, and then pressed and shaped into a flat shape to produce a flat electrode group. The electrode group was stored in a container of a thin metallic can made of aluminum alloy (Al purity: 99%) having a thickness of 0.25 mm.

On the other hand, as for the nonaqueous electrolyte, LiPF₆ as the electrolyte was dissolved in a mixed solvent of fluoroethylene carbonate (FEC), trifluoroethyl methyl carbonate (FEMC), and 1,1,2,2-tetrafluoroethyl-2,2,3,3-tetrafluoropropyl ether (TFTFPE) (weight ratio: 30:40:30) at a concentration of 1.0 mol/L to prepare a liquid nonaqueous electrolyte (nonaqueous electrolytic solution).

This nonaqueous electrolyte was poured into the electrode group in the container to produce a thin nonaqueous electrolyte secondary battery which has the structure shown in FIG. 1 described above and has a thickness of 12 mm, a width of 55 mm, and a height of 82 mm.

### (Examples 2 to 25)

Thin nonaqueous electrolyte secondary batteries were produced in a similar manner to that described in Example 1 except that the positive electrode active materials, the negative electrode active materials, and the inorganic solid-containing layers shown in Tables 1 and 2 below were adopted and the compositions of the nonaqueous electrolyte shown in Table 3 and Table 4 below were adopted. Incidentally, the content of the inorganic solid-containing layer represents content (% by weight) of the inorganic solid particles in the inorganic solid-containing layer. In addition, the weight ratio represents a weight ratio of the fluorinated carbonate based on the weight of the fluorinated ether as 1.

The potential of Li₄Ti₅O₁₂ at which Li is inserted is 1.55 V (vs. Li/Li⁺), and the potential of TiO₂ (B) at which Li is inserted is 1.6 V (vs. Li/Li⁺). Metal lithium negative electrodes of Examples 22 to 25 were produced according to the following methods. Metal lithium foil having a thickness of 150 µm was prepared as the negative electrode. The potential of the negative electrode at which Li is inserted is 0 V (vs. Li/Li⁺).

### (Example 26)

A thin nonaqueous electrolyte secondary battery was produced in a similar manner to that described in Example 1 except that DFEC was used as the fluorinated carbonate instead of FEC; the positive electrode active material, the negative electrode active material, and the inorganic solid-containing layer shown in Table 2 below were adopted; the composition of the nonaqueous electrolyte shown in Table 4 below was adopted; and a separator of a nonwoven fabric made of cellulose fibers was disposed between the inorganic solid-containing layer and the negative electrode active material-containing layer. Specifics such as the thickness of the separator are shown in Table 2.

### (Example 27)

A thin nonaqueous electrolyte secondary battery was produced in a similar manner to that described in Example 1 except that BTrFEE was used as the fluorinated ether; the positive electrode active material, the negative electrode active material, and the inorganic solid-containing layer shown in Table 2 below were adopted; the composition of the nonaqueous electrolyte shown in Table 4 below was adopted; and a separator of a polyethylene porous film (PE) having a porosity of 60% and a thickness of 5 µm was disposed between the inorganic solid-containing layer and the negative electrode active material-containing layer.

### (Example 28)

A thin nonaqueous electrolyte secondary battery was produced in a similar manner to that described in Example 1 except that the inorganic solid-containing layer had a thickness of 1 µm; the positive electrode active material, the negative electrode active material, and the inorganic solid-containing layer shown in Table 2 below were adopted; the composition of the nonaqueous electrolyte shown in Table 4 below was adopted; and a separator of a nonwoven fabric made of cellulose fibers was disposed between the inorganic solid-containing layer and the negative electrode active material-containing layer. Specifics such as the thickness of the separator are shown in Table 2.

### (Example 29)

A thin nonaqueous electrolyte secondary battery was produced in a similar manner to that described in Example 1 except that the inorganic solid-containing layer had a thickness of 30 µm; the positive electrode active material, the negative electrode active material, and the inorganic solid-containing layer shown in Table 2 below were adopted; the composition of the nonaqueous electrolyte shown in Table 4 below was adopted; and a separator of a polyethylene porous film (PE) having a porosity and a thickness similar to those of Example 27 was disposed between the inorganic solid-containing layer and the negative electrode active material-containing layer.

### (Example 30)

A thin nonaqueous electrolyte secondary battery was produced in a similar manner to that described in Example 1 except that, the content of the binder PVdF was changed to 10% by weight and the content of the inorganic solid particles was changed to 90% by weight in the inorganic solid-containing layer; the positive electrode active material, the negative electrode active material, and the inorganic solid-containing layer shown in Table 2 below were adopted; the composition of the nonaqueous electrolyte shown in Table 4 below was adopted; and a separator of a polyethylene porous film (PE) having a porosity and a thickness similar to those of Example 27 was disposed between the inorganic solid-containing layer and the negative electrode active material-containing layer.

### (Example 31)

A thin nonaqueous electrolyte secondary battery was produced in a similar manner to that described in Example 1 except that the content of the binder PVdF was changed to 1% by weight and the content of the inorganic solid particles was changed to 99% by weight in the inorganic solid-containing layer; the positive electrode active material, the negative electrode active material, and the inorganic solid-containing layer shown in Table 2 below were adopted; the composition of the nonaqueous electrolyte shown in Table 4 below was adopted; and a separator of a polyethylene porous film (PE) having a porosity and a thickness similar to those of Example 27 was disposed between the inorganic solid-containing layer and the negative electrode active material-containing layer.

### (Example 32)

A positive electrode without inorganic solid particles added was produced according to the following method. 5% by weight of graphite powder as the conductive material and 3% by weight of PVdF as the binder were added to 92% by weight of the positive electrode active material similar to that of Example 1. Each of the amounts blended is a value based on the positive electrode active material-containing layer as 100% by weight. After the mixed powder thereof was dispersed in n-methylpyrrolidone (NMP) solvent to prepare slurry, the slurry was applied to both surfaces of aluminum alloy foil (purity: 99%) having a thickness of 15 µm followed by drying and pressing to produce a positive electrode in which the amount coated on one side was 12.8 mg/cm², the thickness of one side of the positive electrode active material-containing layer was 43 µm, and the electrode density was 3.1 g/cm³. The specific surface area of the positive electrode active material-containing layer was 0.5 m²/g.

An inorganic solid-containing layer having a thickness of 10 µm was produced on the surface of the produced positive electrode according to a similar method to that of Example 1.

Using the positive electrode and the inorganic solid-containing layer described above, a thin nonaqueous electrolyte secondary battery was produced in a similar manner to that of Example 1 except that a separator of a polyethylene porous film (PE) having a porosity and a thickness similar to those of Example 27 was disposed between the inorganic solid-containing layer and the negative electrode active material-containing layer.

### (Example 33)

A thin nonaqueous electrolyte secondary battery was produced in a similar manner to that of Example 1 except that LiN[FSO₂]₂ was used as the lithium salt instead of LiPF₆, and a separator of a polyethylene porous film (PE) having a porosity and a thickness similar to those of Example 27 was disposed between the inorganic solid-containing layer and the negative electrode active material-containing layer.

### (Example 34)

A thin nonaqueous electrolyte secondary battery was produced in a similar manner to that of Example 1 except that a separator of a nonwoven fabric made of cellulose fibers was disposed between the inorganic solid-containing layer and the negative electrode active material-containing layer. Specifics such as the thickness of the separator are shown in Table 2.

### (Example 35)

A thin nonaqueous electrolyte secondary battery was produced in a similar manner to that of Example 1 except that a separator of a polyethylene porous film (PE) having a porosity of 50% and a thickness of 15 µm was disposed between the inorganic solid-containing layer and the negative electrode active material-containing layer.

### (Comparative Examples 1 to 4)

Thin nonaqueous electrolyte secondary batteries were produced in a similar manner to that described in Example 1 except that a separator of a polyethylene porous film (PE) having a porosity of 50% and a thickness of 15 µm was used instead of the inorganic solid-containing layer, the positive electrode active materials and the negative electrode active materials shown in Table 2 below were adopted, and the compositions of the nonaqueous electrolyte shown in Table 4 below were adopted.

### (Comparative Example 5)

A negative electrode including graphite was produced according to the following method. Graphite powder having an average particle size of 10 µm, a BET specific surface area of 1 m²/g, and a potential at which Li is inserted of 0.15 V (vs. Li/Li⁺), Li_{1.3}Al_{0.3}Zr_{1.7}(PO₄)₃ as the lithium-ion conductor, acetylene black powder, and PVdF as the binder were blended in a weight ratio of 90:3.3:3.3:3.3 and dispersed in n-methylpyrrolidone (NMP) solvent to prepare slurry. The obtained slurry was applied to copper foil having a thickness of 15 µm followed by drying and pressing to produce a negative electrode in which the amount coated on one side was 13 mg/cm², the thickness of one side of the negative electrode active material-containing layer was 59 µm, and the electrode density was 2.7 g/cm³. The porosity of the negative electrode except the current collector was 35%. In addition, the BET specific surface area of the negative electrode active material-containing layer (a surface area per one gram of the negative electrode active material-containing layer) was 0.8 m²/g.

A separator of a polyethylene porous film (PE) having a porosity of 50% and a thickness of 15 µm was used instead of the inorganic solid-containing layer. In addition, a thin nonaqueous electrolyte secondary battery was produced in a similar manner to that described in Example 1 except that the positive electrode active material shown in Table 2 below was adopted, and the composition of the nonaqueous electrolyte shown in Table 4 below was adopted.

### (Comparative Example 6)

A negative electrode including hard carbon was produced according to the following method. Hard carbon powder having an average particle size of 5 µm, a BET specific surface area of 1.5 m²/g, and a potential at which Li is inserted of 0.2 V (vs. Li/Li⁺), Li_{1.3}Al_{0.3}Zr_{1.7}(PO₄)₃ as the lithium-ion conductor, acetylene black powder, and PVdF as the binder were blended in a weight ratio of 90:3.3:3.3:3.3 and dispersed in n-methylpyrrolidone (NMP) solvent to prepare slurry. The obtained slurry was applied to copper foil having a thickness of 15 µm followed by drying and pressing to produce a negative electrode in which the amount coated on one side was 13 mg/cm², the thickness of one side of the negative electrode active material-containing layer was 59 µm, and the electrode density was 2.7 g/cm³. The porosity of the negative electrode except the current collector was 35%. In addition, the BET specific surface area of the negative electrode active material-containing layer (a surface area per one gram of the negative electrode active material-containing layer) was 1.0 m²/g.

A separator of a polyethylene porous film (PE) having a porosity of 50% and a thickness of 15 µm was used instead of the inorganic solid-containing layer. In addition, a thin nonaqueous electrolyte secondary battery was produced in a similar manner to that described in Example 1 except that the positive electrode active material shown in Table 2 below was adopted and the composition of the nonaqueous electrolyte shown in Table 4 below was adopted.

### (Comparative Example 7)

A metal lithium negative electrode was produced according to the following method. Metal lithium foil having a thickness of 150 µm was prepared as the negative electrode. The potential of the negative electrode at which Li is inserted is 0 V (vs. Li/Li⁺).

A separator of a polyethylene porous film (PE) having a porosity of 50% and a thickness of 15 µm was used instead of the inorganic solid-containing layer. In addition, a thin nonaqueous electrolyte secondary battery was produced in a similar manner to that described in Example 1 except that the positive electrode active material shown in Table 2 below was adopted and the composition of the nonaqueous electrolyte shown in Table 4 below was adopted.

### (Comparative Example 8)

A thin nonaqueous electrolyte secondary battery was produced in a similar manner to that of Example 1 except that the nonaqueous electrolyte having the composition shown in Table 4 was used.

The discharge capacity, average operating voltage, energy, discharge capacity retention ratio at -30°C, and charge-and-discharge cycle life at 45°C of each of the produced nonaqueous electrolyte secondary batteries were measured according to the following methods.

The measurement method of charge-and-discharge performance of the obtained nonaqueous electrolyte secondary batteries of Examples 1 to 18 and 26 to 35 and Comparative Examples 1, 2 and 8 is as follows. Each of the nonaqueous electrolyte secondary batteries was charged to 3.1 V with a constant current of 6.5 A (corresponding to 1C rate) at 25°C and subsequently discharged to 1.5 V at 1.3 A (corresponding to 0.2C rate), and a discharge capacity and an average operating voltage at that time were measured. Energy was calculated from the product of the obtained discharge capacity at 25°C and average operating voltage. In addition, a capacity retention ratio on discharging of 6.5 A at -30°C (a capacity retention ratio based on discharging of 6.5 A at 25°C as 100) was measured as a low-temperature performance test. A cycle test in which charging to 3.1 V with a constant current of 6.5 A at 45°C and subsequent discharging to 1.5 V with a constant current of 6.5 A were repeated was conducted as a high-temperature cycle test. The number of cycles at which the capacity retention ratio became 80% of an initial capacity was regarded as a cycle life in the cycle test at 45°C.

The measurement method of charge-and-discharge performance of the obtained nonaqueous electrolyte secondary batteries of Examples 19 to 21 and Comparative Examples 3 and 4 is as follows. Each of the nonaqueous electrolyte secondary batteries was charged to 3.4 V with a constant current of 4 A (corresponding to 1C rate) at 25°C and subsequently discharged to 2.0 V at 0.8 A (corresponding to 0.2C rate), and a discharge capacity and an average operating voltage at that time were measured. Energy was calculated from the product of the obtained discharge capacity at 25°C and average operating voltage. In addition, a capacity retention ratio on discharging of 4 A at -30°C (a capacity retention ratio based on discharging of 4 A at 25°C as 100) was measured as a low-temperature performance test. A cycle test in which charging to 3.4 V with a constant current of 5 A at 45°C and subsequent discharging to 2.0 V with a constant current of 4 A were repeated was conducted as a high-temperature cycle test. The number of cycles at which the capacity retention ratio became 80% of an initial capacity was regarded as a cycle life in the cycle test at 45°C.

The measurement method of charge-and-discharge performance of the obtained nonaqueous electrolyte secondary batteries of Examples 22 to 25 and Comparative Examples 5 to 7 is as follows. Each of the nonaqueous electrolyte secondary batteries was charged at 4.1 V with a constant current of 4 A (corresponding to 1C rate) at 25°C and subsequently discharged to 3 V at 0.8 A (corresponding to 0.2C rate), and a discharge capacity and an average operating voltage at that time were measured. Energy was calculated from the product of the obtained discharge capacity at 25°C and average operating voltage. In addition, a capacity retention ratio on discharging of 4 A at -30°C (a capacity retention ratio based on discharging of 4 A at 25°C as 100) was measured as a low-temperature performance test. A cycle test in which charging to 4.1 V with a constant current of 4 A at 45°C and subsequent discharging to 3.0 V with a constant current of 4 A were repeated was conducted as a high-temperature cycle test. The number of cycles at which the capacity retention ratio became 80% of an initial capacity was regarded as a cycle life in the cycle test at 45°C.

Measurement results thereof are shown in Tables 5 and 6 below.

### [Table 1]

**Table 1**

| | Positive electrode active material | Negative electrode active material | Inorganic solid-containing layer | | | Separator | |
|---|---|---|---|---|---|---|---|
| | | | Inorganic solid particles | Thickness (µm) | Content (% by weight) | Type | Thickness (µm) |
| Example 1 | LiNi_{0.8}Co_{0.1}Mn_{0.1}O₂ | TiNb₂O₇ | Li_{1.3}Al_{0.3}Zr_{1.7} (PO₄)₃ | 10 | 98 | - | - |
| Example 2 | LiNi_{0.8}Co_{0.1}Mn_{0.1}O₂ | TiNb₂O₇ | Li_{1.3}Al_{0.3}Zr_{1.7} (PO₄) ₃ | 10 | 98 | - | - |
| Example 3 | LiNi_{0.8}Co_{0.1}Mn_{0.1}O₂ | TiNb₂O₇ | Li_{1.3}Al_{0.3}Zr_{1.7} (PO₄) ₃ | 10 | 98 | - | - |
| Example 4 | LiNi_{0.8}Co_{0.1}Mn_{0.1}O₂ | TiNb₂O₇ | Li_{1.3}Al_{0.3}Zr_{1.7} (PO₄) ₃ | 10 | 98 | - | - |
| Example 5 | LiNi_{0.8}Co_{0.1}Mn_{0.1}O2 | TiNb₂O₇ | Li_{1.3}Al_{0.3}Zr_{1.7} (PO₄)₃ | 10 | 98 | - | - |
| Example 6 | LiNi_{0.8}Co_{0.1}Mn_{0.1}O₂ | TiNb₂O₇ | Li_{1.3}Al_{0.3}Zr_{1.7} (PO₄) ₃ | 10 | 98 | - | - |
| Example 7 | LiNi_{0.8}Co_{0.1}Mn_{0.1}O₂ | TiNb₂O₇ | Li_{1.3}Al_{0.3}Zr_{1.7} (PO₄)₃ | 10 | 98 | - | - |
| Example 8 | LiNi_{0.8}Co_{0.1}Mn_{0.1}O₂ | TiNb₂O₇ | Li_{1.3}Al_{0.3}Zr_{1.7} (PO₄) ₃ | 10 | 98 | - | - |
| Example 9 | LiNi_{0.8}Co_{0.1}Mn_{0.1}O₂ | TiNb₂O₇ | Li_{1.3}Al_{0.3}Zr_{1.7} (PO₄) ₃ | 10 | 98 | - | - |
| Example 10 | LiNi_{0.8}Co_{0.1}Mn_{0.1}O₂ | TiNb₂O₇ | Li_{1.3}Al_{0.3}Ti_{1.7} (PO₄) ₃ | 10 | 98 | - | - |
| Example 11 | LiNi_{0.8}Co_{0.1}Mn_{0.1}O₂ | Li₄Ti₅O₁₂ | Li_{1.3}Al_{0.3}Ti_{1.7} (PO₄)₃ | 10 | 98 | - | - |
| Example 12 | LiNi_{0.8}Co_{0.1}Mn_{0.1}O₂ | TiO₂ (B) | Li_{1.3}Al_{0.3}Zr_{1.7} (PO₄) ₃ | 10 | 98 | - | - |
| Example 13 | LiNi_{0.8}Co_{0.1}Mn_{0.1}O₂ | TiNb₂O₇ | Li_{1.3}Al_{0.3}Ti_{1.7} (PO₄)₃ | 10 | 98 | - | - |
| Example 14 | LiNi_{0.8}Co_{0.1}Mn_{0.1}O₂ | TiNb₂O₇ | Li_{1.3}Al_{0.3}Ge_{1.7} (PO₄)₃ | 10 | 98 | - | - |
| Example 15 | LiNi_{0.8}Co_{0.1}Mn_{0.1}O₂ | TiNb₂O₇ | Li_{1.2}Ca_{0.3}Zr_{1.9} (PO₄) ₃ | 10 | 98 | - | - |
| Example 16 | LiNi_{0.8}Co_{0.1}Mu_{0.1}O₂ | TiNb₂O₇ | Li_{6.25}Al_{0.25}La₃Zr₃O₁₂ | 10 | 98 | - | - |
| Example 17 | LiNi_{0.8}Co_{0.1}Mn_{0.1}O₂ | TiNb₂O₇ | Al₂O₃ | 10 | 98 | - | - |
| Example 18 | LiNi_{0.8}Co_{0.1}Mn_{0.1}O₂ | TiNb₂O₇ | Li_{1.3}Al_{0.3}Ti_{1.7} (PO₄) ₃ | 10 | 98 | - | - |
| Example 19 | LiNi_{0.5}Mn_{1.5}O₄ | TiNb₂O₇ | Li_{1.3}Al_{0.3}Ti_{1.7} (PO₄) ₃ | 10 | 98 | - | - |
| Example 20 | LiCoPO₄ | TiNb₂O₇ | Li_{1.3}Al_{0.3}Ti_{1.7} (PO₄)₃ | 10 | 98 | - | - |

### [Table 2]

**Table 2**

| | Positive electrode active material | Negative electrode active material | Inorganic solid-containing layer | | | Separator | |
|---|---|---|---|---|---|---|---|
| | | | Inorganic solid particles | Thickness (µm) | Content (% by weight) | Type | Thickness (µm) |
| Example 21 | LiNi_{0.5}Mn_{1.5}O₄ | TiNb₂O₇ | Li_{1.3}Al_{0.3}Ti_{1.7} (PO₄) ₃ | 10 | 98 | - | - |
| Example 22 | LiNi_{0.8}Co_{0.1}Mn_{0.1}O₂ | Li | Li_{1.3}Al_{0.3}Zr_{1.7} (PO₄)₃ | 10 | 98 | - | - |
| Example 23 | LiMn_{0.9}Fe_{0.1}PO₄ | Li | Li_{0.2}Ca_{0.1}Zr_{1.9} (PO₄) ₃ | 10 | 98 | - | - |
| Example 24 | LiFePO₄ | Li | Li_{1.3}Al_{0.3}Zr_{1.7} (PO₄)₃ | 10 | 98 | - | - |
| Example 25 | LiFePO₄ | Li | Li_{1.3}Al_{0.3}Zr_{1.7} (PO₄)₃ | 10 | 98 | - | - |
| Example 26 | LiNi_{0.8}Co_{0.1}Mn_{0.1}O₂ | TiNb₂O₇ | Li_{1.3}Al_{0.3}Zr_{1.7} (PO₄)₃ | 5 | 98 | Cellulose nonwoven fabric | 10 |
| Example 27 | LiNi_{0.8}Co_{0.1}Mn_{0.1}O₂ | TiNb₂O₇ | Li_{1.3}Al_{0.3}Zr_{1.7} (PO₄) ₃ | 10 | 98 | Polyethylene porous film | 5 |
| Example 28 | LiNi_{0.8}Co_{0.1}Mn_{0.1}O₂ | TiNb₂O₇ | Li_{1.3}Al_{0.3}Zr_{1.7} (PO₄)₃ | 1 | 93 | Cellulose nonwoven fabric | 15 |
| Example 29 | LiNi_{0.8}Co_{0.1}Mn_{0.1}O₂ | TiNb₂O₇ | Li_{1.3}Al_{0.3}Zr_{1.7} (PO₄) ₃ | 30 | 95 | Polyethylene porous film | 5 |
| Example 30 | LiNi_{0.8}Co_{0.1}Mn_{0.1}O₂ | TiNb₂O₇ | Li_{1.3}Al_{0.3}Zr_{1.7} (PO₄)₃ | 15 | 90 | Polyethylene porous film | 5 |
| Example 31 | LiNi_{0.8}Co_{0.1}Mn_{0.1}O₂ | TiNb₂O₇ | Li_{1.3}Al_{0.3}Zr_{1.7} (PO₄)₃ | 20 | 99 | Polyethylene porous film | 5 |
| Example 32 | LiNi_{0.8}Co_{0.1}Mn_{0.1}O₂ | TiNb₂O₇ | Li_{1.3}Al_{0.3}Zr_{1.7} (PO₄) ₃ | 10 | 98 | Polyethylene porous film | 5 |
| Example 33 | LiMn_{0.8}Fe_{0.2}PO₄ | TiNb₂O₇ | Li_{1.3}Al_{0.3}Zr_{1.7} (PO₄)₃ | 10 | 98 | Polyethylene porous film | 5 |
| Example 34 | LiNi_{0.6}Co_{0.1}Mn_{0.1}O₂ | TiNb₂O₇ | Li_{1.3}Al_{0.3}Zr_{1.7} (PO₄)₃ | 10 | 98 | Cellulose nonwoven fabric | 5 |
| Example 35 | LiNi_{0.8}Co_{0.1}Mn_{0.1}O₂ | TiNb₂O₇ | Li_{1.3}Al_{0.3}Zr_{1.7} (PO₄) ₃ | 10 | 98 | Polyethylene porous film | 15 |
| Comparative Example 1 | LiNi_{0.8}Co_{0.1}Mn_{0.1} O₂ | TiNb₂O₇ | - | - | - | Polyethylene porous film | 15 |
| Comparative Example 2 | LiNi_{0.8}Co_{0.1}Mn_{0.1}O₂ | TiNb₂O₇ | - | - | - | Polyethylene porous film | 15 |
| Comparative Example 3 | LiNi_{0.5}Mn_{1.5}O₄ | TiNb₂O₇ | - | - | - | Polyethylene porous film | 15 |
| Comparative Example 4 | LiNi_{0.5}Mn_{1.5}O₄ | TiNb₂O₇ | - | - | - | Polyethylene porous film | 15 |
| Comparative Example 5 | LiNi_{0.8}Co_{0.1}Mn_{0.1}O₂ | Graphite | - | - | - | Polyethylene porous film | 15 |
| Comparative Example 6 | LiNi_{0.1}Co_{0.1}Mn_{0.1}O₂ | Hard carbon | - | - | - | Polyethylene porous film | 15 |
| Comparative Example 7 | LiNi_{0.8}Co_{0.1}Mn_{0.1}O₂ | Li | - | - | - | Polyethylene porous film | 15 |
| Comparative Example 8 | LiNi_{0.8}Co_{0.1}Mn_{0.1}O₂ | TiNb₂O₇ | Li_{1.3}Al_{0.3}Zr_{1.7} (PO₄)₃ | 10 | 98 | - | - |

### [Table 3]

**Table 3**

| | Mixed solvent composition (% represents % by weight) | Weight ratio | Lithium salt (mol/L) |
|---|---|---|---|
| Example 1 | 30%FEC/40%FEMC/30%TFTFPE | 2.3 : 1 | 1 mol/L LiPF₆ |
| Example 2 | 30%FEC/40%FEMC/30%TFTrEE | 2.3 : 1 | 1 mol/L LiPF₆ |
| Example 3 | 30%FEC/40%FEMC/30%BTrFEE | 2.3 : 1 | 1 mol/L LiPF₆ |
| Example 4 | 30%FEC/40%FEMC/30%TFTrEE | 2.3 : 1 | 1 mol/L LiPF₆ |
| Example 5 | 30%FEC/40%FEMC/30%TFEE | 2.3 : 1 | 1 mol/L LiPF₆ |
| Example 6 | 30%FEC/40%DFEC/30%TFTFPE | 2.3:1 | 1 mol/L LiPF₆ |
| Example 7 | 30%FEC/40%DFEC/30%TFTFPE | 2.3:1 | 1 mol/L LiPF₆ |
| Example 8 | 30%FEC/40%FDMC/30%TFTFPE | 2.3 : 1 | 1 mol/L LiPF₆ |
| Example 9 | 30%FEC/20%FEMC/50%TFTFPE | 1:1 | 1 mol/L LiPF₆ |
| Example 10 | 30%FEC/60%FEMC/10%TFTFPE | 9 : 1 | 1 mol/L LiPF₆ |
| Example 11 | 30%FEC/40%FEMC/30%TFTFPE | 2.3 : 1 | 1 mol/L LiPF₆ |
| Example 12 | 30%FEC/40%FEMC/30%BTFEE | 2.3 : 1 | 1 mol/L LiPF₆ |
| Example 13 | 30%FEC/40%FEMC/30%TFTFPE | 2.3 : 1 | 1 mol/L LiPF₆ |
| Example 14 | 30%FEC/40%FEMC/30%TFTFPE | 2.3 : 1 | 1 mol/L LiPF₆ |
| Example 15 | 30%FEC/40%FEMC/30%TFTFPE | 2.3 : 1 | 1 mol/L LiPF₆ |
| Example 16 | 30%FEC/40%FEMC/30%TFTFPE | 2.3 : 1 | 1 mol/L LiPF₆ |
| Example 17 | 30%FEC/40%FEMC/30%TFTFPE | 2.3 : 1 | 1 mol/L LiPF₆ |
| Example 18 | 40%FEC/40%TFTFPE/20%DEC | 1:1 | 1 mol/L LiPF₆ |
| Example 19 | 30%FEC/40%FEMC/30%TFTFPE | 2.3:1 | 1 mol/L LiPF₆ |
| Example 20 | 30%FEC/40%FEMC/30%TFTFPE | 2.3:1 | 1 mol/L LiPF₆ |

### [Table 4]

**Table 4**

| | Mixed solvent composition (% represents % by weight) | Weight ratio | Lithium salt (mol/L) |
|---|---|---|---|
| Example 21 | 30%FEC/60%FEMC/10%TFTFPE | 9:1 | 1 mol/L LiPF₆ |
| Example 22 | 30%FEC/40%FEMC/30%TFTFPE | 2.3:1 | 1 mol/L LiPF₆ |
| Example 23 | 50%FEC/30%TFTFPE/20%PC | 1.7:1 | 1 mol/L LiPF₆ |
| Example 24 | 50%FEC/30%TFTrEE/20%DME | 1.7:1 | 1 mol/L LiPF₆ |
| Example 25 | 50%FEC/30%TFTrEE/20%DEE | 1.7:1 | 1 mol/L LiPF₆ |
| Example 26 | 30%DFEC/40%FEMC/30%TFTFPE | 2.3:1 | 1mol/L LiPF₆ |
| Example 27 | 30%FEC/60%FEMC/10%BTrFEE | 9:1 | 1 mol/L LiPF₆ |
| Example 28 | 30%FEC/40%FEMC/30%TFTFPE | 2.3:1 | 1 mol/L LiPF₆ |
| Example 29 | 30%FEC/40%FEMC/30%TFTFPE | 2.3:1 | 1 mol/L LiPF₆ |
| Example 30 | 30%FEC/40%FEMC/30%TFTFPE | 2.3:1 | 1 mol/L LiPF₆ |
| Example 31 | 30%FEC/40%FEMC/30%TFTFPE | 2.3:1 | 1 mol/L LiPF₆ |
| Example 32 | 30%FEC/40%FEMC/30%TFTFPE | 2.3:1 | 1 mol/L LiPF₆ |
| Example 33 | 30%FEC/40%FEMC/30%TFTFPE | 2.3:1 | 1mol/L LiN[FSO₂]₂ |
| Example 34 | 30%FEC/40%FEMC/30%TFTFPE | 2.3:1 | 1 mol/L LiPF₆ |
| Example 35 | 30%FEC/40%FEMC/30%TFTFPE | 2.3:1 | 1 mol/L LiPF₆ |
| Comparative Example 1 | 40%PC/60%DEC | - | 1 mol/L LiPF₆ |
| Comparative Example 2 | 40%FEC/60%FEMC | 10:0 | 1 mol/L LiPF₆ |
| Comparative Example 3 | 40%FEC/50%FEMC/10%DME | 10:0 | 1 mol/L LiPF₆ |
| Comparative Example 4 | 40%EC/60%DEC | - | 1 mol/L LiPF₆ |
| Comparative Example 5 | 40%FEC/60%FEMC | 10:0 | 1 mol/L LiPF₆ |
| Comparative Example 6 | 40%FEC/60%FEMC | 10:0 | 1 mol/L LiPF₆ |
| Comparative Example 7 | 40%EC/60%DME | - | 1 mol/L LiPF₆ |
| Comparative Example 8 | 40%FEC/60%DME | 10:0 | 1mol/L LiPF₆ |

### [Table 5]

**Table 5**

| | Discharge capacity at 25°C (Ah) | Voltage (V) | Energy (Wh) | Discharge capacity retention ratio at -30°C (%) | Cycle life at 45°C (cycles) |
|---|---|---|---|---|---|
| Example 1 | 6.5 | 2.25 | 14.625 | 87 | 3000 |
| Example 2 | 6.4 | 2.25 | 14.4 | 80 | 2000 |
| Example 3 | 6.4 | 2.25 | 14.4 | 88 | 2500 |
| Example 4 | 6.4 | 2.25 | 14.4 | 85 | 2400 |
| Example 5 | 6.4 | 2.25 | 14.4 | 83 | 2400 |
| Example 6 | 6.4 | 2.25 | 14.4 | 85 | 2800 |
| Example 7 | 6.4 | 2.25 | 14.4 | 85 | 2800 |
| Example 8 | 6.5 | 2.25 | 14.6 | 88 | 2600 |
| Example 9 | 6.5 | 2.25 | 14.6 | 89 | 2200 |
| Example 10 | 6.2 | 2.25 | 13.95 | 75 | 2800 |
| Example 11 | 5.4 | 2.3 | 12.42 | 89 | 3500 |
| Example 12 | 5.6 | 2.25 | 12.6 | 80 | 2000 |
| Example 13 | 6.5 | 2.25 | 14.625 | 86 | 3100 |
| Example 14 | 6.2 | 2.25 | 13.95 | 80 | 2800 |
| Example 15 | 6.5 | 2.25 | 14.625 | 88 | 3000 |
| Example 16 | 6.6 | 2.25 | 14.85 | 82 | 2500 |
| Example 17 | 6.0 | 2.2 | 13.2 | 70 | 2000 |
| Example 18 | 6.5 | 2.25 | 14.625 | 90 | 2800 |
| Example 19 | 4.5 | 3.1 | 13.95 | 86 | 1800 |
| Example 20 | 4.6 | 3.2 | 14.172 | 70 | 1600 |

### [Table 6]

**Table 6**

| | Discharge capacity at 25°C (Ah) | Voltage (V) | Energy (Wh) | Discharge capacity retention ratio at -30°C (%) | Cycle life at 45°C (cycles) |
|---|---|---|---|---|---|
| Example 21 | 4.4 | 3.1 | 13.64 | 75 | 1600 |
| Example 22 | 5.0 | 3.7 | 18.5 | 85 | 800 |
| Example 23 | 4.0 | 4.0 | 16.0 | 60 | 900 |
| Example 24 | 4.5 | 3.4 | 15.3 | 70 | 1000 |
| Example 25 | 4.5 | 3.4 | 15.3 | 65 | 1200 |
| Example 26 | 6.2 | 2.25 | 13.95 | 80 | 3200 |
| Example 27 | 6.2 | 2.25 | 13.95 | 83 | 3400 |
| Example 28 | 6.2 | 2.25 | 13.95 | 70 | 2500 |
| Example 29 | 5.5 | 2.25 | 12.375 | 65 | 3300 |
| Example 30 | 5.8 | 2.25 | 13.05 | 82 | 3200 |
| Example 31 | 6.0 | 2.25 | 13.5 | 78 | 3200 |
| Example 32 | 5.6 | 2.25 | 12.6 | 82 | 3200 |
| Example 33 | 6.0 | 2.4 | 14.4 | 70 | 3000 |
| Example 34 | 6.2 | 2.25 | 13.95 | 82 | 3300 |
| Example 35 | 6.0 | 2.25 | 13.5 | 70 | 3100 |
| Comparative Example 1 | 6.2 | 2.25 | 13.95 | 40 | 600 |
| Comparative Example 2 | 6.3 | 2.25 | 14.175 | 35 | 800 |
| Comparative Example 3 | 3.5 | 3.1 | 10.85 | 20 | 50 |
| Comparative Example 4 | 4.0 | 3.1 | 12.4 | 35 | 200 |
| Comparative Example 5 | 2.0 | 3.5 | 7.0 | 10 | 10 |
| Comparative Example 6 | 3.5 | 3.6 | 12.6 | 20 | 500 |
| Comparative Example 7 | 6.0 | 3.7 | 22.2 | 40 | 100 |
| Comparative Example 8 | 3.0 | 3.6 | 10.8 | 20 | 50 |

As is clear from Tables 1 to 6, the nonaqueous electrolyte batteries of Examples 1 to 35 are excellent in discharge capacity retention ratios under the low-temperature environment of -30° as compared to Comparative Examples 1 to 8. In addition, the batteries of Examples 1 to 35 have a high energy and have cycle life at 45°C equivalent to or better than those of Comparative Examples 1 to 8. Especially, Examples 1, 8, 9, 13, 15, 16, 18, 22, 23, 24, and 25 have large amounts of energy (Wh). Examples 3, 8, 9, 11, 15, and 18 are excellent in discharge performance at -30°C. Examples 1, 11, 13, 15, 26, 27, and 29 to 35 are excellent in cycle life performance at a high temperature of 45°C. Example 18 is relatively excellent in cycle life performance and discharge performance at -30°C even in high-voltage operation of 3.1 V.

In addition, batteries of Examples 26 to 35 in which a separator is stacked on the inorganic solid-containing layer have better discharge capacity retention ratios at - 30°C than those of Comparative Examples and have cycle life at 45°C of 2500 or more. From the results of Examples 1, 9, and 10, it is found that the energy, discharge capacity retention ratio at -30°C, and cycle life at 45°C are excellent when the weight ratio between the fluorinated carbonate and the fluorinated ether is within the range of 1:1 to 9:1. From the results of Examples 26 to 29, it is found that the energy, discharge capacity retention ratio at -30°C, and cycle life at 45°C are excellent when the thickness of the inorganic solid-containing layer is within the range of 1 µm or more and 30 µm or less. On the other hand, from the results of Examples 26 to 31, it is found that the energy, discharge capacity retention ratio at - 30°C, and cycle life at 45°C are excellent when the content of the inorganic solid particles in the inorganic solid-containing layer is within the range of 90% by weight or more and 99% by weight or less.

All of Comparative Example 1 to 7 are examples using no inorganic solid-containing layer. As shown in Comparative Example 3, when no inorganic solid-containing layer is used, even the mixed solvent that includes the fluorinated carbonate and the fluorinated ether is used for the nonaqueous electrolyte, both of the discharge capacity under a low-temperature environment of -30°C and cycle life at 45°C are poor as compared to Examples. As shown in Comparative Example 8, even when the inorganic solid-containing layer is used, all of the energy, discharge capacity retention ratio at -30°C, and cycle life at 45°C are poor as compared to Examples unless the nonaqueous electrolyte contains both the fluorinated carbonate and the fluorinated ether.

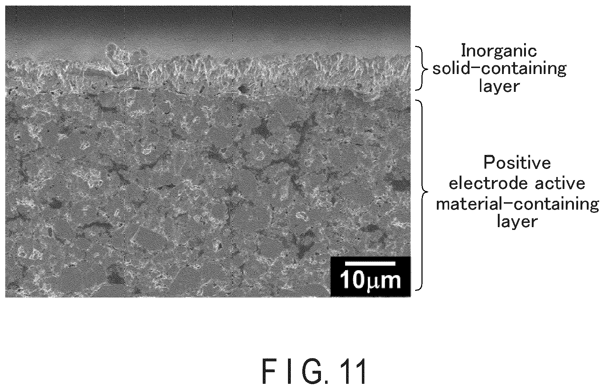

FIG. 11 is a scanning electron microscope (SEM) picture in which a cross-section of the positive electrode active material-containing layer and the inorganic solid-containing layer of Example 26 has been captured. As shown in FIG. 11, the inorganic solid-containing layer covers the surface (primary surface) of the positive electrode active material-containing layer. In addition, since the inorganic solid-containing layer is formed on the positive electrode active material-containing layer through coating, the inorganic solid-containing layer is held or supported on the positive electrode active material-containing layer.

According to the secondary battery of at least one of the approaches or Examples described above, by virtue of including an inorganic solid-containing layer that contains: a mixed solvent that includes a fluorinated carbonate and a fluorinated ether; a lithium salt dissolved in the mixed solvent; and inorganic solid particles, excellent charge-and-discharge cycle life, high-temperature durability, and performance at a low temperature can be achieved.

## Claims

1. A secondary battery (100) comprising
a positive electrode (3);
a negative electrode (4) capable of allowing lithium ions to be inserted and to be extracted; and
an inorganic solid-containing layer (5) which is disposed between the positive electrode (3) and the negative electrode (4) and comprises: a mixed solvent; a lithium salt dissolved in the mixed solvent; and inorganic solid particles, and the mixed solvent comprising a fluorinated carbonate and a fluorinated ether.

2. The secondary battery (100) according to claim 1, wherein a weight ratio between the fluorinated carbonate and the fluorinated ether is within a range of 1:1 to 9:1.

3. The secondary battery (100) according to claim 1 or 2, wherein the fluorinated carbonate comprises at least one selected from the group consisting of fluoroethylene carbonate, difluoroethylene carbonate, trifluoroethyl methyl carbonate, trifluorodiethyl carbonate, and trifluorodimethyl carbonate.

4. The secondary battery (100) according to any one of claims 1 to 3, wherein the fluorinated ether comprises at least one selected from the group consisting of 1,1,2,2-tetrafluoroethyl-2,2,2-trifluoroethyl ether, 1,1,2,2-tetrafluoroethyl-2,2,3,3-tetrafluoropropyl ether, bis(2,2,2-trifluoroethyl) ether, bis(1,1,2,2-tetrafluoroethyl) ether, and ethyl 1,1,2,2-tetrafluoroethyl ether.

5. The secondary battery (100) according to any one of claims 1 to 4, wherein the inorganic solid particles comprise a lithium phosphate compound with a nasicon-type structure represented by Li₁₊ₓM₂ (PO₄)₃, wherein M is at least one selected from the group consisting of Ti, Ge, Zr, Al, and Ca, and 0 ≤ x ≤ 0.5.

6. The secondary battery (100) according to any one of claims 1 to 5, wherein the negative electrode (4) comprises at least one selected from the group consisting of a lithium titanium-containing oxide, a titanium-containing oxide, and a titanium niobium-containing oxide.

7. The secondary battery (100) according to any one of claims 1 to 6, wherein the inorganic solid-containing layer (5) has a surface facing the positive electrode (3).

8. The secondary battery (100) according to any one of claims 1 to 7, which further comprising a separator disposed between the positive electrode (3) and the negative electrode (4).

9. The secondary battery (100) according to claim 8, wherein the inorganic solid-containing layer (5) has a surface facing the positive electrode (3), and the separator has a surface facing the negative electrode (4).

10. A battery pack (300) comprising the secondary battery (100) according to any one of claims 1 to 9.

11. The battery pack (300) according to claim 10, further comprising:
an external power distribution terminal (350); and
a protective circuit (346).

12. The battery pack (300) according to claim 10 or 11, comprising plural of the secondary battery (100),
wherein the secondary batteries (100) are electrically connected in series, in parallel, or in a combination of in-series and in-parallel.

13. A vehicle (400) comprising the battery pack (300) according to any one of claims 10 to 12.

14. The vehicle (400) according to claim 13, comprising a mechanism configured to convert kinetic energy of the vehicle into regenerative energy.

## Patentansprüche

1. Sekundärbatterie (100), umfassend
eine positive Elektrode (3);
eine negative Elektrode (4), die es ermöglicht Lithiumionen einzulagern und zu extrahieren; und
eine einen anorganischen Feststoff enthaltende Schicht (5), die zwischen der positiven Elektrode (3) und der negativen Elektrode (4) angeordnet ist und umfasst: ein Lösungsmittelgemisch; ein in dem Lösungsmittelgemisch gelöstes Lithiumsalz; und anorganische Feststoffpartikel, und wobei das Lösungsmittelgemisch ein fluoriertes Carbonat und einen fluorierten Ether umfasst.

2. Sekundärbatterie (100) gemäß Anspruch 1, wobei das Gewichtsverhältnis zwischen dem fluorierten Carbonat und dem fluorierten Ether in einem Bereich von 1:1 bis 9 : 1 liegt.

3. Sekundärbatterie (100) gemäß Anspruch 1 oder 2, wobei das fluorierte Carbonat mindestens eines ausgewählt aus der Gruppe bestehend aus Fluorethylencarbonat, Difluorethylencarbonat, Trifluorethylmethylcarbonat, Trifluordiethylcarbonat und Trifluordimethylcarbonat umfasst.

4. Sekundärbatterie (100) gemäß einem der Ansprüche 1 bis 3, wobei der fluorierte Ether mindestens einen ausgewählt aus der Gruppe bestehend aus 1, 1, 2, 2-Tetrafluorethyl-2,2,2-trifluorethylether, 1,1,2,2-Tetrafluorethyl-2,2,3,3-tetrafluorpropylether, Bis(2,2,2-trifluorethyl)ether, Bis(1, 1, 2, 2,-tetrafluorethyl)ether und Ethyl-1,1,2,2-tetrafluorethylether umfasst.

5. Sekundärbatterie (100) gemäß einem der Ansprüche 1 bis 4, wobei die anorganischen Feststoffpartikel eine Lithiumphosphatverbindung mit einer Struktur vom NASICON-Typ umfassen, dargestellt durch Li₁₊ₓM₂ (PO₄) ₃, wobei M mindestens eines ausgewählt aus der Gruppe bestehend aus Ti, Ge, Zr, Al und Ca ist, und 0 ≤ x ≤ 0,5.

6. Sekundärbatterie (100) gemäß einem der Ansprüche 1 bis 5, wobei die negative Elektrode (4) mindestens eines ausgewählt aus der Gruppe bestehend aus einem Lithium-Titan-haltigen Oxid, einem Titan-haltigen Oxid und einem Titan-Niob-haltigen Oxid umfasst.

7. Sekundärbatterie (100) gemäß einem der Ansprüche 1 bis 6, wobei die einen anorganischen Feststoff enthaltende Schicht (5) eine der positiven Elektrode (3) zugewandte Oberfläche hat.

8. Sekundärbatterie (100) gemäß einem der Ansprüche 1 bis 7, die ferner einen Separator umfasst, der zwischen der positiven Elektrode (3) und der negativen Elektrode (4) angeordnet ist.

9. Sekundärbatterie (100) gemäß Anspruch 8, wobei die einen anorganischen Feststoff enthaltende Schicht (5) eine der positiven Elektrode (3) zugewandte Oberfläche hat und der Separator eine der negativen Elektrode (4) zugewandte Oberfläche hat.

10. Batteriepack (300), umfassend die Sekundärbatterie (100) gemäß einem der Ansprüche 1 bis 9.

11. Batteriepack (300) gemäß Anspruch 10, ferner umfassend:
einen externen Stromverteilungsanschluss (350); und
eine Schutzschaltung (346).

12. Batteriepack (300) gemäß Anspruch 10 oder 11, umfassend mehrere der Sekundärbatterien (100),
wobei die Sekundärbatterien (100) elektrisch in Reihe, parallel oder in einer Kombination aus Reihenschaltung und Parallelschaltung geschalten sind.

13. Fahrzeug (400), umfassend den Batteriepack (300) gemäß einem der Ansprüche 10 bis 12.

14. Fahrzeug (400) gemäß Anspruch 13, umfassend einen Mechanismus, der konfiguriert ist, um kinetische Energie des Fahrzeugs in regenerative Energie umzuwandeln.

## Revendications

1. Batterie secondaire (100) comprenant
une électrode positive (3) ;
une électrode négative (4) pouvant permettre l'insertion et l'extraction d'ions lithium ; et
une couche contenant un solide inorganique (5) qui est disposée entre l'électrode positive (3) et l'électrode négative (4) et comprend : un solvant mixte ; un sel de lithium dissous dans le solvant mixte ; et des particules de solide inorganique, et le solvant mixte comprenant un carbonate fluoré et un éther fluoré.

2. Batterie secondaire (100) selon la revendication 1, dans laquelle un rapport de poids entre le carbonate fluoré et l'éther fluoré se situe dans une plage de 1:1 à 9:1.

3. Batterie secondaire (100) selon la revendication 1 ou 2, dans laquelle le carbonate fluoré comprend au moins un élément choisi dans le groupe constitué par le carbonate de fluoroéthylène, le carbonate de difluoroéthylène, le carbonate de trifluoroéthylméthyle, le carbonate de trifluorodiéthyle et le carbonate de trifluorodiméthyle.

4. Batterie secondaire (100) selon l'une quelconque des revendications 1 à 3, dans laquelle l'éther fluoré comprend au moins un élément choisi dans le groupe constitué par l'éther de 1,1,2,2-tétrafluoroéthyl-2,2,2-trifluoroéthyle, l'éther de 1,1,2,2-tétrafluoroéthyl-2,2,3,3-tétrafluoropropyle, l'éther de bis(2,2,2-trifluoroéthyle), l'éther de (bis-1,1,2,2-tétrafluoroéthyle) et l'éther d'éthyle 1,1,2,2-tétrafluoroéthyle.

5. Batterie secondaire (100) selon l'une quelconque des revendications 1 à 4, dans laquelle les particules de solide inorganique comprennent un composé de phosphate de lithium avec une structure de type Nasicon représentée par Li₁₊ₓM₂(PO₄)₃, dans laquelle M est au moins un élément choisi dans le groupe constitué par Ti, Ge, Zr, Al et Ca, et 0 ≤ x ≤ 0,5.

6. Batterie secondaire (100) selon l'une quelconque des revendications 1 à 5, dans laquelle l'électrode négative (4) comprend au moins un élément choisi dans le groupe constitué par un oxyde contenant du lithium et du titane, un oxyde contenant du titane et un oxyde contenant du titane et du niobium.

7. Batterie secondaire (100) selon l'une quelconque des revendications 1 à 6, dans laquelle la couche contenant un solide inorganique (5) présente une surface orientée vers l'électrode positive (3).

8. Batterie secondaire (100) selon l'une quelconque des revendications 1 à 7, comprenant en outre un séparateur disposé entre l'électrode positive (3) et l'électrode négative (4).

9. Batterie secondaire (100) selon la revendication 8, dans laquelle la couche contenant un solide inorganique (5) présente une surface orientée vers l'électrode positive (3) et le séparateur présente une surface orientée vers l'électrode négative (4).

10. Bloc-batterie (300) comprenant la batterie secondaire (100) selon l'une quelconque des revendications 1 à 9.

11. Bloc-batterie (300) selon la revendication 10, comprenant en outre :
une borne de distribution de puissance externe (350) ; et
un circuit de protection (346).

12. Bloc-batterie (300) selon la revendication 10 ou 11, comprenant plusieurs batteries secondaires (100),
dans lequel les batteries secondaires (100) sont raccordées électriquement en série, en parallèle ou dans une combinaison de raccordements en série et en parallèle.

13. Véhicule (400) comprenant le bloc-batterie (300) selon l'une quelconque des revendications 10 à 12.

14. Véhicule (400) selon la revendication 13, comprenant un mécanisme configuré pour convertir l'énergie cinétique du véhicule en énergie régénérative.
